# EUROPEAN PATENT APPLICATION

(11) **EP 4 460 147 A1**
(43) Date of publication of application: **06.11.2024**
(21) Application number: 23755665.9
(22) Date of filing: 28.01.2023
(51) Int. Cl.: H04W 76/15

(54) **LINK STATE INDICATION METHOD IN EMLSR MODE AND RELATED APPARATUS**

(30) Priority: 18.02.2022 CN 202210153355; 10.05.2022 CN 202210504981
(71) Applicant: Huawei Technologies Co., Ltd., Shenzhen, Guangdong 518129 (CN)
(72) Inventor: LIN, Yousi, Shenzhen, Guangdong 518129 (CN); GAN, Ming, Shenzhen, Guangdong 518129 (CN)
(74) Representative: MERH-IP Matias Erny Reichl Hoffmann Patentanwälte PartG mbB
(86) International application number: PCT/CN2023/073528
(87) International publication number: WO 2023/155661

(57) **Abstract**

This application relates to the field of wireless communication, and is applied to a wireless local area network that supports 802.11be or a next generation standard, and in particular, to a link state indication method in an EMLSR mode. The method includes: When an EMLSR non-AP MLD finds that states of all or some links of the EMLSR non-AP MLD change, the EMLSR non-AP MLD sends a frame on any available link. The frame carries indication information indicating an available link or a link whose state changes in the EMLSR non-AP MLD. Alternatively, the frame may carry another piece of indication information indicating that a state of a link changes. According to embodiments of this application, an AP MLD does not send a signal to the EMLSR non-AP MLD on an unavailable link of the EMLSR non-AP MLD, to reduce a waste of resources.

## Description

This application claims priorities to Chinese Patent Application No. 202210153355.9, filed with the China National Intellectual Property Administration on February 18, 2022 and entitled "LINK STATE INDICATION METHOD IN EMLSR MODE AND RELATED APPARATUS", and to Chinese Patent Application No. 202210504981.8, filed with the China National Intellectual Property Administration on May 10, 2022 and entitled "LINK STATE INDICATION METHOD IN EMLSR MODE AND RELATED APPARATUS", both of which are incorporated herein by reference in their entireties.

### TECHNICAL FIELD

This application relates to the field of wireless communication technologies, and in particular, to a link state indication method in an enhanced multi-link single radio (enhanced multi-link single radio, EMLSR) mode and a related apparatus.

### BACKGROUND

A continuous technical goal of development and evolution of a wireless local area network (wireless local area network, WLAN) or a cellular network is to continuously improve a throughput. WLAN system protocols are mainly discussed by standard groups of the institute of electrical and electronics engineers (IEEE, institute of electrical and electronics engineers). In the standards such as IEEE 802.11a/b/g/n/ac/ax, the throughput is continuously improved. The next-generation Wi-Fi standard IEEE 802.11be is referred to as extremely high throughput (extremely high throughput, EHT) or Wi-Fi 7. A key technology of the standard is to improve a throughput by using multi-link (multi-link, ML) communication. A core idea of multi-link communication is that a WLAN device that supports the next-generation IEEE 802.11 standard, that is, an EHT device, has multi-band (multi-band) transmitting and receiving capabilities, and therefore uses a larger bandwidth for data transmission, to significantly increase the throughput. The multi-band includes but is not limited to a 2.4 GHz Wi-Fi band, a 5 GHz Wi-Fi band, and a 6 GHz Wi-Fi band. A band is referred to as a link, and a plurality of bands are referred to as a plurality of links. In 802.11be, a WLAN device that supports multi-link communication is referred to as a multi-link device (multi-link device, MLD). Apparently, the multi-link device may perform parallel communication on a plurality of links (or a plurality of bands), so that a transmission rate is greatly improved. The multi-link device (MLD) includes one or more affiliated stations (affiliated STA). The affiliated station is a logical station and may operate over a link. The affiliated station may be an access point (access point, AP) or a non-access point station (non-access point station, non-AP STA). In the 802.11be standard, a multi-link device whose affiliated station is an AP is referred to as an AP MLD, and a multi-link device whose affiliated station is a non-AP STA is referred to as a non-AP MLD.

However, because there may be a station (station, STA) with a limited receive capability in some cases, an enhanced multi-link single radio (enhanced Multi-Link single radio, EMLSR) mode is introduced, and is mainly applied to the non-AP MLD. In the EMLSR mode, the non-AP MLD receives a frame in a single radio (single radio) mode on each link, that is, performs a listening operation (listening operation) on a channel in a 1x1 (1 input 1 output) manner and receives an initial control frame (initial control frame) sent by an AP MLD in an orthogonal frequency division multiplexing (orthogonal frequency division multiplexing, OFDM) physical layer protocol data unit (physical layer protocol data unit, PPDU) type and a non-high throughput (high throughput, HT) duplicate (non-HT duplicate) PPDU type, and reception of frames of other types is not supported currently. In the EMLSR mode, after receiving the initial control frame sent by the AP MLD on an EMLSR link (EMLSR link), a STA of the non-AP MLD temporarily switches a spatial stream/receive antenna on another link to the EMLSR link to form a 2x2 (2 inputs and 2 outputs) antenna configuration, so as to perform subsequent data transmission. The listening operation herein is defined as clear channel assessment (clear channel assessment, CCA).

Because the non-AP MLD in the EMLSR mode may have a plurality of (two or more) antennas, each antenna corresponds to different STAs in the non-AP MLD and operates over a different link. For the AP MLD associated with the non-AP MLD in the EMLSR mode, the entire non-AP MLD or STAs on some links of the non-AP MLD may be unavailable due to some reasons (including but not limited to coexistence (coexistence) of different devices or different technologies). Therefore, when the entire non-AP MLD or the STAs on some links of the non-AP MLD are unavailable due to some reasons, normal communication is affected.

### SUMMARY

This application provides a link state indication method in an EMLSR mode and a related apparatus, so that an AP MLD can learn of, in a timely manner, a state change of a link of an EMLSR non-AP MLD associated with the AP MLD, and the AP MLD does not send a signal to the EMLSR non-AP MLD on an unavailable link of the EMLSR non-AP MLD, to reduce a waste of resources.

This application provides a link state indication method for a non-AP MLD with an NSTR capability and a related apparatus, so that an AP MLD can learn of, in a timely manner, a state change of an NSTR link of a non-AP MLD associated with the AP MLD, and the AP MLD does not send a signal to the non-AP MLD on an unavailable NSTR link of the non-AP MLD, to reduce a waste of resources.

The following describes this application from different aspects. It should be understood that mutual reference may be made to the following implementations and advantageous effects of the different aspects.

In this application, for ease of description, a "non-AP MLD (operating) in an EMLSR mode" is denoted as an "EMLSR non-AP MLD". In other words, the EMLSR non-AP MLD may indicate that (stations on) one or more links of the non-AP MLD enter the EMLSR mode. Similarly, "a station entering the EMLSR mode in the EMLSR non-AP MLD" may be denoted as an "EMLSR STA".

In this application, for ease of description, "a link in some link pairs (link pair) with the NSTR capability in the non-AP MLD" is denoted as an NSTR link.

The following uses link state indication in the EMLSR mode as an example. Link state indication in another mode is similar.

According to a first aspect, this application provides a link state indication method in an EMLSR mode. The method includes: When an EMLSR non-AP MLD finds that all links (or STAs on all links) of the EMLSR non-AP MLD are to be unavailable for an AP MLD associated with the EMLSR non-AP MLD, the EMLSR non-AP MLD generates a first frame, and sends the first frame on any available link. The first frame may include first indication information indicating that (all links of) the EMLSR non-AP MLD is disabled (disabled) for the AP MLD. The first frame may be a data frame.

It should be understood that, "disabled", "unavailable", and the like in this application are all for the AP MLD. For example, "the EMLSR non-AP MLD is disabled" means that the EMLSR non-AP MLD cannot be used for the AP MLD associated with the EMLSR non-AP MLD; or the AP MLD cannot communicate with the EMLSR non-AP MLD; or for the AP MLD, the EMLSR non-AP MLD does not receive or reply to an uplink trigger frame. However, the EMLSR non-AP MLD may communicate with another non-AP MLD or a single-link STA. That is, the EMLSR non-AP MLD is still available for another non-AP MLD or a single-link STA.

It should be further understood that after the EMLSR non-AP MLD sends the first frame, or after a period of time after the EMLSR non-AP MLD sends the first frame, (all links of) the EMLSR non-AP MLD is unavailable for the AP MLD associated with the EMLSR non-AP MLD.

When the EMLSR non-AP MLD is temporarily unavailable due to some reasons, the AP MLD associated with the EMLSR non-AP MLD cannot communicate with the EMLSR non-AP MLD. However, the AP MLD does not know whether the EMLSR non-AP MLD associated with the AP MLD is currently unavailable. Therefore, when the AP MLD wants to communicate with the EMLSR non-AP MLD, the AP MLD sends a signal, for example, an initial control frame, to the EMLSR non-AP MLD. In addition, a link resource of the EMLSR non-AP MLD is occupied or an antenna resource is occupied, the initial control frame sent by the AP MLD cannot be correctly received, and therefore the initial control frame cannot be responded to. As a result, the AP MLD cannot receive a response to the initial control frame and may repeatedly send the initial control frame. Each time before sending the initial control frame, the AP MLD performs channel contention, to obtain a channel resource to send the initial control frame, causing a waste of resources.

Therefore, in this application, when the EMLSR non-AP MLD is temporarily unavailable due to some reasons, the first indication information is carried in the data frame to report that the EMLSR non-AP MLD is unavailable, so that the AP MLD learns a state change of a link to the EMLSR non-AP MLD in a timely manner, and the AP MLD does not send a signal, for example, an initial control frame, to the EMLSR non-AP MLD on an unavailable link of the EMLSR non-AP MLD, to reduce a waste of resources.

With reference to the first aspect, in a possible implementation, the first frame further includes an uplink multi-user disable subfield and/or an uplink multi-user data disable subfield.

Optionally, both the uplink multi-user disable subfield and the uplink multi-user data disable subfield are set to 1.

With reference to the first aspect, in a possible implementation, after the EMLSR non-AP MLD notifies the AP MLD associated with the EMLSR non-AP MLD that the EMLSR non-AP MLD enters an unavailable state, if the EMLSR non-AP MLD finds that a link of the EMLSR non-AP MLD resumes to available, the EMLSR non-AP MLD may send a second frame to the AP MLD on the link that resumes to available. That is, after the EMLSR non-AP MLD sends the first frame, the method further includes: The EMLSR non-AP MLD sends the second frame. The second frame may include second indication information indicating that (a link of) the EMLSR non-AP MLD is available (enabled), or indicates that (a link of) the EMLSR non-AP MLD resumes (resume), or indicates that (a link of) the EMLSR non-AP MLD switches back to a listening operation (switch back to listening operation). The second frame may be a data frame.

Optionally, the second indication information may be carried in an EHT OM control subfield. The second frame may further include an OM control subfield. The OM control subfield includes an uplink multi-user disable subfield and an uplink multi-user data disable subfield. Both the uplink multi-user disable subfield and the uplink multi-user data disable subfield are set to 1.

With reference to the first aspect, in a possible implementation, the second indication information indicates that a first link of the EMLSR non-AP MLD is available, and the first link is a link for sending the second frame by the EMLSR non-AP MLD.

Optionally, the second indication information may be carried in an EHT OM control subfield. The second frame may further include an OM control subfield. The OM control subfield includes an uplink multi-user disable subfield and an uplink multi-user data disable subfield. Both the uplink multi-user disable subfield and the uplink multi-user data disable subfield are set to 0. The uplink multi-user disable subfield set to 0, the uplink multi-user data disable subfield set to 0, and the second indication information jointly indicate that the first link of the EMLSR non-AP MLD is available.

In this application, when the entire EMLSR non-AP MLD ends unavailability, or an EMLSR STA on a link of the EMLSR non-AP MLD ends unavailability and is ready to resume to a listening mode (listening mode), the AP MLD is notified by using the second indication information, so that the AP MLD learns of an available link of the EMLSR non-AP MLD in a timely manner, and the AP MLD schedules the EMLSR non-AP MLD to perform uplink transmission or sends downlink data to the EMLSR non-AP MLD.

With reference to the first aspect, in a possible implementation, antenna capability configurations of the EMLSR non-AP MLD are asymmetric. That is, each link of the EMLSR non-AP MLD has one antenna. One antenna is a common antenna, and other antennas are limited antennas. A link on which the common antenna is located is referred to as a receive full capability link (RX full capability link), and a link on which the limited antenna is located is referred to as a receive limitation link (RX limitation link). Alternatively, there is at least one receive full capability link and at least one receive limitation link in the EMLSR non-AP MLD. When the receive full capability link of the EMLSR non-AP MLD is available, the EMLSR non-AP MLD receives a multi-user request-to-send (multi-user request to send, MU-RTS) frame or a buffer status report poll (buffer status report poll, BSRP) frame. The MU-RTS frame or the BSRP frame carries indication information indicating whether the MU-RTS frame or the BSRP frame is an initial control frame, or indicating whether the MU-RTS frame or the BSRP frame received by a station is an initial control frame.

In this application, when antenna capability configurations of the EMLSR non-AP MLD are asymmetric, the indication information is carried in the MU-RTS frame or the BSRP frame, to indicate whether the MU-RTS frame or the BSRP frame is an initial control frame, or whether the MU-RTS frame or the BSRP frame received by a station is an initial control frame. In this way, an EMLSR STA on the receive full capability link of the EMLSR non-AP MLD can determine whether the received MU-RTS frame or BSRP frame is an initial control frame, to determine a subsequent behavior of the EMLSR STA.

According to a second aspect, this application provides a link state indication method in an EMLSR mode. The method includes: An AP MLD receives a first frame, where the first frame includes first indication information, and the first indication information indicates that (all links of) an EMLSR non-AP MLD is disabled (disabled). The AP MLD determines, based on the first indication information in the first frame, that the EMLSR non-AP MLD is disabled for the AP MLD. The first frame may be a data frame.

With reference to the second aspect, in a possible implementation, the first indication information may be carried in an EHT OM control subfield. The EHT OM control subfield is an extension of an OM control subfield in the EHT background. The first frame may further include an OM control subfield, and the OM control subfield includes an uplink multi-user disable subfield and/or an uplink multi-user data disable subfield. It should be understood that, if the first frame includes the uplink multi-user disable subfield and/or the uplink multi-user data disable subfield, when reading the first indication information, the AP MLD may ignore a value to which the uplink multi-user disable subfield and/or the uplink multi-user data disable subfield in the first frame are/is set.

Optionally, both the uplink multi-user disable subfield and the uplink multi-user data disable subfield are set to 1.

With reference to the second aspect, in a possible implementation, after the AP MLD receives the first frame, the method further includes: The AP MLD receives a second frame. The second frame includes second indication information. The second indication information indicates that (a link of) the EMLSR non-AP MLD is available, or indicates that (a link of) the EMLSR non-AP MLD resumes (resume), or indicates that (a link of) the EMLSR non-AP MLD switches back to a listening operation (switch back to listening operation). The second frame may be a data frame.

Optionally, the second indication information may be carried in an EHT OM control subfield. The second frame may further include an OM control subfield. The OM control subfield includes an uplink multi-user disable subfield and an uplink multi-user data disable subfield. Both the uplink multi-user disable subfield and the uplink multi-user data disable subfield are set to 1.

With reference to the second aspect, in a possible implementation, the second indication information indicates that a first link of the EMLSR non-AP MLD is available, and the first link is a link for sending the second frame by the EMLSR non-AP MLD.

Optionally, the second indication information may be carried in an EHT OM control subfield. The second frame may further include an OM control subfield. The OM control subfield includes an uplink multi-user disable subfield and an uplink multi-user data disable subfield. Both the uplink multi-user disable subfield and the uplink multi-user data disable subfield are set to 0. The uplink multi-user disable subfield set to 0, the uplink multi-user data disable subfield set to 0, and the second indication information jointly indicate that the first link of the EMLSR non-AP MLD is available.

With reference to the second aspect, in a possible implementation, when a receive full capability link of the EMLSR non-AP MLD is available, the AP MLD may send, to the EMLSR non-AP MLD, an MU-RTS frame or a BSRP frame that carries indication information, to indicate whether the MU-RTS frame or the BSRP frame is an initial control frame, or indicate whether the MU-RTS frame or the BSRP frame received by a station is an initial control frame.

According to a third aspect, this application provides a communication apparatus. The communication apparatus may be a non-AP MLD or a chip in the non-AP MLD, for example, a Wi-Fi chip. The communication apparatus includes: a processing unit, configured to generate a first frame, where the first frame includes first indication information, and the first indication information indicates that the EMLSR non-AP MLD is disabled for an AP MLD; and a transceiver unit, configured to send the first frame. The first frame is a data frame.

With reference to the third aspect, in a possible implementation, the first indication information may be carried in an EHT OM control subfield. The EHT OM control subfield is an extension of an OM control subfield in the EHT background. The first frame may further include an OM control subfield, and the OM control subfield includes an uplink multi-user disable subfield and/or an uplink multi-user data disable subfield.

Optionally, both the uplink multi-user disable subfield and the uplink multi-user data disable subfield are set to 1.

With reference to the third aspect, in a possible implementation, the transceiver unit is further configured to send a second frame. The second frame includes second indication information, and the second indication information indicates that the EMLSR non-AP MLD is available. The second frame is a data frame.

Optionally, the second frame further includes an uplink multi-user disable subfield and an uplink multi-user data disable subfield, and both the uplink multi-user disable subfield and the uplink multi-user data disable subfield are set to 1.

With reference to the third aspect, in a possible implementation, the second indication information indicates that a first link of the EMLSR non-AP MLD is available, and the first link is a link for sending the second frame by the EMLSR non-AP MLD.

Optionally, the second frame further includes an uplink multi-user disable subfield and an uplink multi-user data disable subfield. Both the uplink multi-user disable subfield and the uplink multi-user data disable subfield are set to 0. The uplink multi-user disable subfield set to 0, the uplink multi-user data disable subfield set to 0, and the second indication information jointly indicate that the first link of the EMLSR non-AP MLD is available.

With reference to the third aspect, in a possible implementation, the transceiver unit is further configured to: when a receive full capability link of the EMLSR non-AP MLD is available, receive an MU-RTS frame or a BSRP frame. The MU-RTS frame or the BSRP frame carries indication information indicating whether the MU-RTS frame or the BSRP frame is an initial control frame, or indicating whether the MU-RTS frame or the BSRP frame received by a station is an initial control frame.

According to a fourth aspect, this application provides a communication apparatus. The communication apparatus may be an AP MLD or a chip in the AP MLD, for example, a Wi-Fi chip. The communication apparatus includes: a transceiver unit, configured to receive a first frame, where the first frame includes first indication information, and the first indication information indicates that an EMLSR non-AP MLD is disabled for the AP MLD; and a processing unit, configured to determine, based on the first indication information in the first frame, that the EMLSR non-AP MLD is disabled.

With reference to the fourth aspect, in a possible implementation, the first indication information may be carried in an EHT OM control subfield. The EHT OM control subfield is an extension of an OM control subfield in the EHT background. The first frame may further include an OM control subfield, and the OM control subfield includes an uplink multi-user disable subfield and/or an uplink multi-user data disable subfield.

Optionally, both the uplink multi-user disable subfield and the uplink multi-user data disable subfield are set to 1.

With reference to the fourth aspect, in a possible implementation, the transceiver unit is further configured to receive a second frame. The second frame includes second indication information, and the second indication information indicates that (a link of) the EMLSR non-AP MLD is available. The second frame may be a data frame.

Optionally, the second frame further includes an uplink multi-user disable subfield and an uplink multi-user data disable subfield, and both the uplink multi-user disable subfield and the uplink multi-user data disable subfield are set to 1.

With reference to the fourth aspect, in a possible implementation, the second indication information indicates that a first link of the EMLSR non-AP MLD is available, and the first link is a link for sending the second frame by the EMLSR non-AP MLD.

Optionally, the second frame further includes an uplink multi-user disable subfield and an uplink multi-user data disable subfield. Both the uplink multi-user disable subfield and the uplink multi-user data disable subfield are set to 0. The uplink multi-user disable subfield set to 0, the uplink multi-user data disable subfield set to 0, and the second indication information jointly indicate that the first link of the EMLSR non-AP MLD is available.

With reference to the fourth aspect, in a possible implementation, the transceiver unit is further configured to: when a receive full capability link of the EMLSR non-AP MLD is available, send an MU-RTS frame or a BSRP frame. The MU-RTS frame or the BSRP frame carries indication information indicating whether the MU-RTS frame or the BSRP frame is an initial control frame, or indicating whether the MU-RTS frame or the BSRP frame received by a station is an initial control frame.

According to a fifth aspect, this application provides a link state indication method in an EMLSR mode. The method includes: When an EMLSR non-AP MLD finds that states of all or some links of the EMLSR non-AP MLD change, for example, for an AP MLD associated with the EMLSR non-AP MLD, (a station on) at least one link of the EMLSR non-AP MLD is unavailable or resumes from unavailable to a listening mode, the EMLSR non-AP MLD generates a third frame and sends the third frame on any available link. The third frame includes fourth indication information indicating an available link or a link whose state changes in the EMLSR non-AP MLD.

In this application, when the EMLSR non-AP MLD or an EMLSR STA on a link of the EMLSR non-AP MLD is temporarily unavailable due to some reasons, a changed link or an available link is actively reported, so that the AP MLD learns, in a timely manner, the available link or the changed link of the EMLSR non-AP MLD associated with the AP MLD, and the AP MLD does not send a signal, for example, an initial control frame, to the EMLSR non-AP MLD on an unavailable link of the EMLSR non-AP MLD, to reduce a waste of resources.

With reference to the fifth aspect, in a possible implementation, antenna capability configurations of the EMLSR non-AP MLD are asymmetric. That is, each link of the EMLSR non-AP MLD has one antenna. One antenna is a common antenna, and other antennas are limited antennas. Alternatively, there is at least one receive full capability link and at least one receive limitation link in the EMLSR non-AP MLD. When the receive full capability link of the EMLSR non-AP MLD is available, the EMLSR non-AP MLD receives an MU-RTS frame or a BSRP frame. The MU-RTS frame or the BSRP frame carries indication information indicating whether the MU-RTS frame or the BSRP frame is an initial control frame, or indicating whether the MU-RTS frame or the BSRP frame received by a station is an initial control frame.

According to a sixth aspect, this application provides a link state indication method in an EMLSR mode. The method includes: An AP MLD receives a third frame. The third frame includes fourth indication information, and the fourth indication information indicates an available link or a link whose state changes in the EMLSR non-AP MLD. The AP MLD determines an available link of the EMLSR non-AP MLD based on the fourth indication information in the third frame.

With reference to the sixth aspect, in a possible implementation, when a receive full capability link of the EMLSR non-AP MLD is available, the AP MLD may send, to the EMLSR non-AP MLD, an MU-RTS frame or a BSRP frame that carries indication information, to indicate whether the MU-RTS frame or the BSRP frame is an initial control frame, or indicate whether the MU-RTS frame or the BSRP frame received by a station is an initial control frame.

According to a seventh aspect, this application provides a communication apparatus. The communication apparatus may be a non-AP MLD or a chip in the non-AP MLD, for example, a Wi-Fi chip. The communication apparatus includes: a processing unit, configured to generate a third frame, where the third frame includes fourth indication information, and the fourth indication information indicates an available link or a link whose state changes in the EMLSR non-AP MLD; and a transceiver unit, configured to send the third frame.

With reference to the seventh aspect, in a possible implementation, the transceiver unit is further configured to: when a receive full capability link of the EMLSR non-AP MLD is available, receive an MU-RTS frame or a BSRP frame. The MU-RTS frame or the BSRP frame carries indication information indicating whether the MU-RTS frame or the BSRP frame is an initial control frame, or indicating whether the MU-RTS frame or the BSRP frame received by a station is an initial control frame.

According to an eighth aspect, this application provides a communication apparatus. The communication apparatus may be an AP MLD or a chip in the AP MLD, for example, a Wi-Fi chip. The communication apparatus includes: a transceiver unit, configured to receive a third frame, where the third frame includes fourth indication information, and the fourth indication information indicates an available link or a link whose state changes in an EMLSR non-AP MLD; and a processing unit, configured to determine an available link of the EMLSR non-AP MLD based on the fourth indication information in the third frame.

With reference to the eighth aspect, in a possible implementation, the transceiver unit is further configured to: when a receive full capability link of the EMLSR non-AP MLD is available, send an MU-RTS frame or a BSRP frame. The MU-RTS frame or the BSRP frame carries indication information indicating whether the MU-RTS frame or the BSRP frame is an initial control frame, or indicating whether the MU-RTS frame or the BSRP frame received by a station is an initial control frame.

In a possible implementation of any one of the fifth aspect to the eighth aspect, the third frame further includes third indication information, and the third indication information indicates that a state of a link of the non-AP MLD changes. The non-AP MLD is a non-AP MLD that supports an EMLSR mode.

In a possible implementation of any one of the fifth aspect to the eighth aspect, that a state of a link of the non-AP MLD changes includes but is not limited to: An EMLSR link is disabled, and an unavailable link of the EMLSR non-AP MLD changes to an available EMLSR link.

In a possible implementation of any one of the fifth aspect to the eighth aspect, when the state change of the link of the non-AP MLD is that the EMLSR link is disabled, the third indication information specifically indicates that the EMLSR link is disabled, or indicates that one or more EMLSR links are no longer members of EMLSR links and are not used by the non-AP MLD for the EMLSR mode. Correspondingly, the fourth indication information indicates an available link of the EMLSR non-AP MLD or a disabled EMLSR link of the EMLSR non-AP MLD.

In this application, when the EMLSR non-AP MLD or an EMLSR STA on a link of the EMLSR non-AP MLD is temporarily unavailable due to some reasons, the EMLSR non-AP MLD reports a state change of the link of the EMLSR non-AP MLD and the changed link to the AP MLD. In this way, the AP MLD learns an available link and/or an unavailable link of the EMLSR non-AP MLD in a timely manner, and the AP MLD does not send a signal, for example, an initial control frame, to the EMLSR non-AP MLD on an unavailable link of the EMLSR non-AP MLD, to reduce a waste of resources.

In a possible implementation of any one of the fifth aspect to the eighth aspect, when the state change of the link of the non-AP MLD is that an unavailable link of the EMLSR non-AP MLD changes to an available EMLSR link, the third indication information specifically indicates that there is an unavailable link that changes to (or resumes to) an available EMLSR link in the EMLSR non-AP MLD, or indicates that there is an unavailable link that switches back to a listening operation in the EMLSR non-AP MLD, or indicates that one or more EMLSR links are to be used by the non-AP MLD for the EMLSR mode and change to members of the EMLSR links, or switch back to the listening operation. Correspondingly, the fourth indication information indicates an available link of the EMLSR non-AP MLD, or an EMLSR link that changes from unavailable to available in the EMLSR non-AP MLD.

In this application, when the EMLSR non-AP MLD ends unavailability, or an EMLSR STA on a link of the EMLSR non-AP MLD ends unavailability and is ready to resume to a listening mode (listening mode), the EMLSR non-AP MLD reports a state change of a link of the EMLSR non-AP MLD and the changed link to the AP MLD, so that the AP MLD learns an available link of the EMLSR non-AP MLD in a timely manner, and the AP MLD schedules the EMLSR non-AP MLD to perform uplink transmission or sends downlink data to the EMLSR non-AP MLD.

In a possible implementation of any one of the fifth aspect to the eighth aspect, the third indication information is represented by two subfields. One subfield indicates that there is an EMLSR link disabled, and the other subfield indicates that there is an unavailable link that changes to an available EMLSR link in the EMLSR non-AP MLD. In other words, the third indication information specifically indicates that there is an EMLSR link disabled and that there is no unavailable link that changes to an available EMLSR link in the EMLSR non-AP MLD. Alternatively, the third indication information specifically indicates that there is no EMLSR link disabled and that there is an unavailable link that changes to an available EMLSR link in the EMLSR non-AP MLD.

In a possible implementation of any one of the fifth aspect to the eighth aspect, the third indication information and the fourth indication information can be located in an AP assistance request (AP assistance request, AAR) control subfield of a high throughput (high throughput, HT) control field of the third frame.

In this application, the existing AAR control subfield carries the third indication information and the fourth indication information, and no new frame format and procedure need to be designed, so that signaling overheads can be reduced.

In a possible implementation of any one of the fifth aspect to the eighth aspect, the third indication information and the fourth indication information can be located in an aggregated control (Aggregated-control, A-control) subfield of the third frame.

In this application, the new A-control subfield is designed to carry the third indication information and the fourth indication information. Meanings of the A-control subfield are clear, and a conventional station does not misread the A-control subfield (because the conventional station does not understand the newly designed A-control subfield).

In a possible implementation of any one of the fifth aspect to the eighth aspect, the third frame is an EML operating mode notification (operating mode notification, OMN) frame. The third indication information and the fourth indication information can be located in an EML control field of the third frame, and an EMLSR mode subfield included in the EML control field is set to 1.

Optionally, the EML control field may further include one or more of the following information: disabling start time, availability start time, disabling end time, disabling duration, and transmit and receive capabilities of an available link of the EMLSR non-AP MLD.

In this application, the EML control field of the EML OMN frame (namely, the third frame) carries the third indication information and the fourth indication information. Because the EML control field is extensible, some optional information may be further carried. Implementation of the EML OMN frame is more flexible, and more information can be carried.

In a possible implementation of any one of the fifth aspect to the eighth aspect, the fourth indication information is a bitmap, and one bit of the fourth indication information corresponds to one link. When a bit in the fourth indication information is set to a first value, it indicates that a link corresponding to the bit is an available link or a link whose state changes. When a bit in the fourth indication information is set to a second value, it indicates that a link corresponding to the bit is an unavailable link or a link whose state does not change. The first value is 1, and the second value is 0; or the first value is 0, and the second value is 1.

In this application, by using the bitmap, not only an available link or a link whose state changes in the EMLSR non-AP MLD can be indicated, but also an unavailable link or a link whose state does not change in the EMLSR non-AP MLD can be indicated. That is, in this application, a state of each link of the EMLSR non-AP MLD can be indicated by using the bitmap, that is, available or unavailable, so that the AP MLD can determine an available link of the EMLSR non-AP MLD.

According to a ninth aspect, this application provides a link state indication method in an EMLSR mode. The method includes: After an EMLSR non-AP MLD and an associated AP MLD enter the EMLSR mode by exchanging EML OMN frames, the EMLSR non-AP MLD generates a first EML OMN frame, and sends the first EML OMN frame to the AP MLD. The first EML OMN frame may include an EMLSR mode subfield and an EMLSR link bitmap, the EMLSR mode subfield is set to 1, and the first EML OMN frame is used to notify an updated EMLSR link. It should be understood that, for a meaning of the EMLSR link bitmap, refer to the description in the existing standard. Details are not described herein. It should be further understood that, for a frame format of the first EML OMN frame, refer to the description of the EML OMN frame in the existing standard. Details are not described herein. In other words, in this application, a function of an EML OMN frame is added, and a frame format of the EML OMN frame is not changed.

In this application, a new field (or subfield) does not need to be added to indicate a state change of a link of the EMLSR non-AP MLD, but a function and a specific rule of an EML OMN frame are added to notify the state change of the link. In this way, the AP MLD can learn of, in a timely manner, a currently available link of the EMLSR non-AP MLD associated with the AP MLD, and the AP MLD does not send a signal, for example, an initial control frame, to the EMLSR non-AP MLD on an unavailable link of the EMLSR non-AP MLD, to reduce a waste of resources.

With reference to the ninth aspect, in a possible implementation, antenna capability configurations of the EMLSR non-AP MLD are asymmetric. That is, each link of the EMLSR non-AP MLD has one antenna. One antenna is a common antenna, and other antennas are limited antennas. Alternatively, there is at least one receive full capability link and at least one receive limitation link in the EMLSR non-AP MLD. When the receive full capability link of the EMLSR non-AP MLD is available, the EMLSR non-AP MLD receives an MU-RTS frame or a BSRP frame. The MU-RTS frame or the BSRP frame carries indication information indicating whether the MU-RTS frame or the BSRP frame is an initial control frame, or indicating whether the MU-RTS frame or the BSRP frame received by a station is an initial control frame.

According to a tenth aspect, this application provides a link state indication method in an EMLSR mode. The method includes: After an EMLSR non-AP MLD and an associated AP MLD enter the EMLSR mode by exchanging EML OMN frames, the AP MLD receives a first EML OMN frame. The first EML OMN frame includes an EMLSR mode subfield and an EMLSR link bitmap, the EMLSR mode subfield is set to 1, and the first EML OMN frame is used to notify an updated EMLSR link. Then, the AP MLD determines an available link of the EMLSR non-AP MLD based on the first EML OMN frame.

With reference to the tenth aspect, in a possible implementation, when a receive full capability link of the EMLSR non-AP MLD is available, the AP MLD may send, to the EMLSR non-AP MLD, an MU-RTS frame or a BSRP frame that carries indication information, to indicate whether the MU-RTS frame or the BSRP frame is an initial control frame, or indicate whether the MU-RTS frame or the BSRP frame received by a station is an initial control frame.

According to an eleventh aspect, this application provides a communication apparatus. The communication apparatus may be a non-AP MLD or a chip in the non-AP MLD, for example, a Wi-Fi chip. The communication apparatus includes: a processing unit, configured to: after the EMLSR non-AP MLD and an associated AP MLD enter an EMLSR mode by exchanging EML OMN frames, generate a first EML OMN frame, where the first EML OMN frame includes an EMLSR mode subfield and an EMLSR link bitmap, the EMLSR mode subfield is set to 1, and the first EML OMN frame is used to notify an updated EMLSR link; and a transceiver unit, configured to send the first EML OMN frame to the AP MLD.

With reference to the eleventh aspect, in a possible implementation, the transceiver unit is further configured to: when a receive full capability link of the EMLSR non-AP MLD is available, receive an MU-RTS frame or a BSRP frame. The MU-RTS frame or the BSRP frame carries indication information indicating whether the MU-RTS frame or the BSRP frame is an initial control frame, or indicating whether the MU-RTS frame or the BSRP frame received by a station is an initial control frame.

According to a twelfth aspect, this application provides a communication apparatus. The communication apparatus may be an AP MLD or a chip in the AP MLD, for example, a Wi-Fi chip. The communication apparatus includes: a transceiver unit, configured to: after an EMLSR non-AP MLD and the associated AP MLD enter an EMLSR mode by exchanging EML OMN frames, receive a first EML OMN frame, where the first EML OMN frame includes an EMLSR mode subfield and an EMLSR link bitmap, the EMLSR mode subfield is set to 1, and the first EML OMN frame is used to notify an updated EMLSR link; and a processing unit, configured to determine an available link of the EMLSR non-AP MLD based on the first EML OMN frame.

With reference to the twelfth aspect, in a possible implementation, the transceiver unit is further configured to: when a receive full capability link of the EMLSR non-AP MLD is available, send an MU-RTS frame or a BSRP frame. The MU-RTS frame or the BSRP frame carries indication information indicating whether the MU-RTS frame or the BSRP frame is an initial control frame, or indicating whether the MU-RTS frame or the BSRP frame received by a station is an initial control frame.

In a possible implementation of any one of the ninth aspect to the twelfth aspect, the first EML OMN frame further includes one or more of the following information: a start time of an EMLSR link update, and transmit and receive capabilities of an available link of the EMLSR non-AP MLD.

According to a thirteenth aspect, this application provides a frame type indication method in an EMLSR mode. The method includes: There is at least one receive full capability link and at least one receive limitation link in an EMLSR non-AP MLD. The EMLSR non-AP MLD receives an MU-RTS frame or a BSRP frame, where the MU-RTS frame or the BSRP frame includes indication information, and the indication information indicates whether the MU-RTS frame or the BSRP frame is an initial control frame. The EMLSR non-AP MLD determines whether the received MU-RTS frame or BSRP frame is an initial control frame.

It should be understood that, there may be links with asymmetric antenna capability configurations in the EMLSR non-AP MLD. That is, each link has one antenna, an antenna has a stronger receive capability and can receive all types of PPDUs, and another antenna has a weaker receive capability and can receive only some types of PPDUs. Because an AP may normally communicate with an EMLSR STA with a stronger antenna receive capability, and does not need to use an antenna on another link, the AP may not need to send an initial control frame before sending downlink data to the EMLSR STA with a stronger antenna receive capability. Therefore, when the EMLSR STA receives the MU-RTS frame or the BSRP frame, the EMLSR STA cannot determine whether the received frame is an initial control frame. That is, the EMLSR non-AP MLD cannot determine whether an antenna/spatial stream on another link needs to be temporarily switched to a link on which the EMLSR STA operates.

Therefore, in this application, when antenna capability configurations of the EMLSR non-AP MLD are asymmetric, indication information is added to the MU-RTS frame or the BSRP frame, to indicate whether the MU-RTS frame or the BSRP frame is an initial control frame, so that the EMLSR STA on the receive full capability link of the EMLSR non-AP MLD can determine whether the received MU-RTS frame or BSRP frame is an initial control frame, to determine a behavior of the EMLSR STA after the EMLSR STA receives the MU-RTS frame or the BSRP frame.

According to a fourteenth aspect, this application provides a frame type indication method in an EMLSR mode. The method includes: An AP MLD generates and sends an MU-RTS frame or a BSRP frame. The MU-RTS frame or the BSRP frame includes indication information, and the indication information indicates whether the MU-RTS frame or the BSRP frame is an initial control frame.

Optionally, the AP MLD may send the MU-RTS frame or the BSRP frame on a receive full capability link, or may send the MU-RTS frame or the BSRP frame on a receive limitation link. Because an EMLSR STA on the receive limitation link can receive only the initial control frame, the indication information in the MU-RTS frame or the BSRP frame sent on the receive limitation link indicates that the MU-RTS frame or the BSRP frame is an initial control frame.

According to a fifteenth aspect, this application provides a communication apparatus. The communication apparatus may be a non-AP MLD or a chip in the non-AP MLD, for example, a Wi-Fi chip. The communication apparatus includes: a transceiver unit, configured to receive an MU-RTS frame or a BSRP frame, where the MU-RTS frame or the BSRP frame includes indication information, and the indication information indicates whether the MU-RTS frame or the BSRP frame is an initial control frame; and a processing unit, configured to determine whether the received MU-RTS frame or BSRP frame is an initial control frame.

According to a sixteenth aspect, this application provides a communication apparatus. The communication apparatus may be an AP MLD or a chip in the AP MLD, for example, a Wi-Fi chip. The communication apparatus includes: a processing unit, configured to generate an MU-RTS frame or a BSRP frame, where the MU-RTS frame or the BSRP frame includes indication information, and the indication information indicates whether the MU-RTS frame or the BSRP frame is an initial control frame; and a transceiver unit, configured to send the MU-RTS frame or the BSRP frame.

In a possible implementation of any one of the thirteenth aspect to the sixteenth aspect, the indication information is located in a common information field of the MU-RTS frame or the BSRP frame.

In this application, the indication information is carried in the common information field, to resolve a problem that the STA on the receive full capability link cannot determine whether the received MU-RTS frame or BSRP frame is an initial control frame in the EMLSR mode with asymmetric antenna configurations.

In a possible implementation of any one of the thirteenth aspect to the sixteenth aspect, in a first user information field of the indication information control frame, the first user information field includes an association identifier 12 subfield, and the indication information specifically indicates whether an MU-RTS frame or a BSRP frame received by a station indicated by the association identifier 12 subfield is an initial control frame.

Optionally, the control frame includes one or more user information fields, and the first user information field is a user information field corresponding to an EMLSR station in the one or more user information fields. The EMLSR station is a station that enters the EMLSR mode in the EMLSR non-AP MLD.

In this application, the indication information is carried in the user information field, to resolve a problem that the EMLSR STA on the receive full capability link of the EMLSR non-AP MLD cannot determine whether the received MU-RTS frame or BSRP frame is an initial control frame. Different information can be indicated for different stations, and this implementation is more flexible. For example, the indication information is carried in the user information field, so that a same MU-RTS frame or BSRP frame is an initial control frame for some EMLSR STAs, and is a common control frame for the other EMLSR STAs.

According to a seventeenth aspect, this application provides a communication apparatus. The communication apparatus is specifically a non-AP MLD, and includes a processor and a transceiver. The transceiver is configured to receive and send a frame, and the processor is configured to execute program instructions, so that the communication apparatus performs the method provided in embodiments of this application. Optionally, the communication apparatus further includes a memory. The memory is configured to store a computer program, and the computer program includes program instructions.

In a design, the processor is configured to generate a first frame. The first frame includes first indication information, and the first indication information indicates that the EMLSR non-AP MLD is disabled for an AP MLD. The transceiver is configured to send the first frame.

In a design, the processor is configured to generate a third frame. The third frame includes fourth indication information, and the fourth indication information indicates an available link or a link whose state changes in the EMLSR non-AP MLD. The transceiver is configured to send the third frame. Optionally, the third frame further includes third indication information. The third indication information indicates that a state of a link of the non-AP MLD changes, and the non-AP MLD is a non-AP MLD that supports an EMLSR mode.

In a design, after the EMLSR non-AP MLD and an associated AP MLD enter the EMLSR mode by exchanging EML OMN frames, the processor is configured to generate a first EML OMN frame. The first EML OMN frame includes an EMLSR mode subfield and an EMLSR link bitmap, the EMLSR mode subfield is set to 1, and the first EML OMN frame is used to notify an updated EMLSR link. The transceiver is configured to send the first EML OMN frame to the AP MLD.

In a design, the transceiver is configured to receive a control frame. The control frame includes indication information, the indication information indicates whether the control frame is an initial control frame, and there is at least one receive full capability link and at least one receive limitation link in the EMLSR non-AP MLD. The processor is configured to determine whether the received control frame is an initial control frame.

According to an eighteenth aspect, this application provides a communication apparatus. The communication apparatus is specifically an AP MLD, and includes a processor and a transceiver. The transceiver is configured to receive and send a frame, and the processor is configured to execute program instructions, so that the communication apparatus performs the method provided in embodiments of this application. Optionally, the communication apparatus further includes a memory. The memory is configured to store a computer program, and the computer program includes program instructions.

In a design, the transceiver is configured to receive a first frame. The first frame includes first indication information, and the first indication information indicates that an EMLSR non-AP MLD is disabled for the AP MLD. The processor is configured to determine, based on the first indication information in the first frame, that the EMLSR non-AP MLD is disabled.

In a design, the transceiver is configured to receive a third frame. The third frame includes fourth indication information, and the fourth indication information indicates an available link or a link whose state changes in the EMLSR non-AP MLD. The processor is configured to determine an available link of the EMLSR non-AP MLD based on the fourth indication information in the third frame. Optionally, the third frame further includes third indication information. The third indication information indicates that a state of a link of the non-AP MLD changes, and the non-AP MLD is a non-AP MLD that supports an EMLSR mode.

In a design, after the EMLSR non-AP MLD and the associated AP MLD enter the EMLSR mode by exchanging EML OMN frames, the transceiver is configured to receive a first EML OMN frame. The first EML OMN frame includes an EMLSR mode subfield and an EMLSR link bitmap, the EMLSR mode subfield is set to 1, and the first EML OMN frame is used to notify an updated EMLSR link. The processor is configured to determine an available link of the EMLSR non-AP MLD based on the first EML OMN frame.

In a design, the processor is configured to generate a control frame. The control frame includes a first user information field, the control frame includes indication information, and the indication information indicates whether the control frame is an initial control frame. The transceiver is configured to send the control frame.

According to a nineteenth aspect, this application provides a communication apparatus. The communication apparatus is implemented in a product form of a chip, and includes an input/output interface and a processing circuit. The communication apparatus is a chip in a non-AP MLD.

In a design, the processing circuit is configured to generate a first frame. The first frame includes first indication information, and the first indication information indicates that the EMLSR non-AP MLD is disabled for an AP MLD. The input/output interface is configured to output the first frame, and send the first frame through an antenna after the first frame is processed by a radio frequency circuit.

In a design, the processing circuit is configured to generate a third frame. The third frame includes fourth indication information, and the fourth indication information indicates an available link or a link whose state changes in the EMLSR non-AP MLD. The input/output interface outputs the third frame, and sends the third frame through an antenna after the third frame is processed by the radio frequency circuit. Optionally, the third frame further includes third indication information. The third indication information indicates that a state of a link of the non-AP MLD changes, and the non-AP MLD is a non-AP MLD that supports an EMLSR mode.

In a design, after the EMLSR non-AP MLD and the associated AP MLD enter the EMLSR mode by exchanging EML OMN frames, the processing circuit is configured to generate a first EML OMN frame. The first EML OMN frame includes an EMLSR mode subfield and an EMLSR link bitmap, the EMLSR mode subfield is set to 1, and the first EML OMN frame is used to notify an updated EMLSR link. The input/output interface outputs the first EML OMN frame, and sends the first EML OMN frame through an antenna after the first EML OMN frame is processed by the radio frequency circuit.

In a design, the input/output interface is configured to input a control frame received through an antenna and a radio frequency circuit. The control frame includes indication information, the indication information indicates whether the control frame is an initial control frame, and there is at least one receive full capability link and at least one receive limitation link in the EMLSR non-AP MLD. The processing circuit is configured to determine whether the received control frame is an initial control frame.

According to a twentieth aspect, this application provides a communication apparatus. The communication apparatus is implemented in a product form of a chip, and includes an input/output interface and a processing circuit. The communication apparatus is a chip in an AP MLD.

In a design, the input/output interface is configured to input a first frame received through an antenna and a radio frequency circuit. The first frame includes first indication information, and the first indication information indicates that an EMLSR non-AP MLD is disabled for the AP MLD. The processing circuit is configured to determine, based on the first indication information in the first frame, that the EMLSR non-AP MLD is disabled.

In a design, the input/output interface is configured to input a third frame received through the antenna and the radio frequency circuit. The third frame includes fourth indication information, and the fourth indication information indicates an available link or a link whose state changes in the EMLSR non-AP MLD. The processing circuit is configured to determine an available link of the EMLSR non-AP MLD based on the fourth indication information in the third frame. Optionally, the third frame further includes third indication information. The third indication information indicates that a state of a link of the non-AP MLD changes, and the non-AP MLD is a non-AP MLD that supports an EMLSR mode.

In a design, after the EMLSR non-AP MLD and the associated AP MLD enter an EMLSR mode by exchanging EML OMN frames, the input/output interface is configured to input a first EML OMN frame received through the antenna and the radio frequency circuit. The first EML OMN frame includes an EMLSR mode subfield and an EMLSR link bitmap, the EMLSR mode subfield is set to 1, and the first EML OMN frame is used to notify an updated EMLSR link. The processing circuit is configured to determine an available link of the EMLSR non-AP MLD based on the first EML OMN frame.

In a design, the processing circuit is configured to generate a control frame. The control frame includes indication information, and the indication information indicates whether the control frame is an initial control frame. The input/output interface is configured to output the control frame, and send the control frame through the antenna after the control frame is processed by the radio frequency circuit.

According to a twenty-first aspect, this application provides a computer-readable storage medium. The computer-readable storage medium stores program instructions. When the program instructions are run on a computer, the computer is enabled to perform the link state indication method in the EMLSR mode according to the first aspect, the second aspect, the fifth aspect, the sixth aspect, the ninth aspect, or the tenth aspect.

According to a twenty-second aspect, this application provides a computer-readable storage medium. The computer-readable storage medium stores program instructions. When the program instructions are run on a computer, the computer is enabled to perform the frame type indication method in the EMLSR mode according to the thirteenth aspect or the fourteenth aspect.

According to a twenty-third aspect, this application provides a computer program product including program instructions. When the program instructions are run on a computer, the computer performs the link state indication method in the EMLSR mode according to the first aspect, the second aspect, the fifth aspect, the sixth aspect, the ninth aspect, or the tenth aspect.

According to a twenty-fourth aspect, this application provides a computer program product including program instructions. When the program instructions are run on a computer, the computer is enabled to perform the frame type indication method in the EMLSR mode according to the thirteenth aspect or the fourteenth aspect.

In this embodiment of this application, the AP MLD can learn of, in a timely manner, a state change of a link of an EMLSR non-AP MLD associated with an AP MLD, so that the AP MLD does not send a signal to the EMLSR non-AP MLD on an unavailable link of the EMLSR non-AP MLD, to reduce a waste of resources. In addition, a problem that a STA on a receive full capability link cannot determine whether a received MU-RTS frame or BSRP frame is an initial control frame in an EMLSR mode with asymmetric antenna configurations can be resolved.

According to a twenty-fifth aspect, this application provides a link state indication method, which is specifically a link state indication method in an NSTR link pair, and includes but is not limited to the following steps.

A non-AP MLD generates a third frame. The third frame includes fourth indication information, and the fourth indication information indicates an available link or a link whose state changes in the non-AP MLD.

The non-AP MLD sends the third frame.

According to a twenty-sixth aspect, this application provides a link state indication method, which is specifically a link state indication method in an NSTR link pair, and includes but is not limited to the following steps.

An AP MLD receives a third frame. The third frame includes fourth indication information, and the fourth indication information indicates an available link or a link whose state changes in a non-AP MLD.

Optionally, if the third frame further includes third indication information, the third indication information indicates whether a state of a link of the non-AP MLD changes. Specifically, for implementations of the third indication information and the fourth indication information, refer to the foregoing description. Details are not described herein again.

The AP MLD determines an available link of the non-AP MLD based on the fourth indication information in the third frame.

Optionally, after receiving the third frame, an AP MLD associated with the non-AP MLD determines the available link of the non-AP MLD based on the third indication information and the fourth indication information carried in the third frame.

According to a twenty-seventh aspect, this application provides a communication apparatus. The communication apparatus is configured to implement the link state indication method according to the twenty-fifth aspect or the twenty-sixth aspect.

According to a twenty-eighth aspect, this application provides a computer-readable storage medium. The computer-readable storage medium stores program instructions. When the program instructions are run on a computer, the computer is enabled to perform the link state indication method according to the twenty-fifth aspect or the twenty-sixth aspect.

According to a twenty-ninth aspect, this application provides a computer program product including program instructions. When the program instructions are run on a computer, the computer is enabled to perform the link state indication method according to the twenty-fifth aspect or the twenty-sixth aspect.

### BRIEF DESCRIPTION OF DRAWINGS

To describe the technical solutions in embodiments of this application more clearly, the following briefly describes the accompanying drawings used for describing the embodiments.
FIG. 1 is a schematic diagram of an architecture of a wireless communication system according to an embodiment of this application;
FIG. 2a is a schematic diagram of a structure of a multi-link device according to an embodiment of this application;
FIG. 2b is a schematic diagram of another structure of a multi-link device according to an embodiment of this application;
FIG. 3 is a schematic diagram of multi-link communication according to an embodiment of this application;
FIG. 4 is a schematic diagram of communication between a non-AP MLD and an AP MLD in an EMLSR mode;
FIG. 5 is a first schematic flowchart of a link state indication method in an EMLSR mode according to an embodiment of this application;
FIG. 6 is a schematic diagram of a frame format of an OM control subfield according to an embodiment of this application;
FIG. 7a is a schematic diagram of a frame format of an OM control subfield and an EHT OM control subfield in an HT control field according to an embodiment of this application;
FIG. 7b is a schematic diagram of another frame format of an OM control subfield and an EHT OM control subfield in an HT control field according to an embodiment of this application;
FIG. 8 is a second schematic flowchart of a link state indication method in an EMLSR mode according to an embodiment of this application;
FIG. 9a is a schematic diagram of a frame format of an AAR control subfield according to an embodiment of this application;
FIG. 9b is a schematic diagram of a frame format of an A-control subfield according to an embodiment of this application;
FIG. 9c is a schematic diagram of a frame format of an EML control field according to an embodiment of this application;
FIG. 10a is a schematic diagram of another frame format of an AAR control subfield according to an embodiment of this application;
FIG. 10b is a schematic diagram of still another frame format of an AAR control subfield according to an embodiment of this application;
FIG. 11a is a schematic diagram of another frame format of an A-control subfield according to an embodiment of this application;
FIG. 11b is a schematic diagram of still another frame format of an A-control subfield according to an embodiment of this application;
FIG. 12a is a schematic diagram of another frame format of an EML control field according to an embodiment of this application;
FIG. 12b is a schematic diagram of still another frame format of an EML control field according to an embodiment of this application;
FIG. 13 is a third schematic flowchart of a link state indication method in an EMLSR mode according to an embodiment of this application;
FIG. 14 is a schematic flowchart of a frame type indication method in an EMLSR mode according to an embodiment of this application;
FIG. 15 is a schematic diagram of a frame format of a user information field in an MU-RTS frame or a BSRP frame according to an embodiment of this application;
FIG. 16 is another schematic flowchart of a frame type indication method in an EMLSR mode according to an embodiment of this application;
FIG. 17 is a schematic diagram of a frame format of a common information field in an MU-RTS frame or a BSRP frame according to an embodiment of this application;
FIG. 18 is a schematic diagram of a structure of a communication apparatus according to an embodiment of this application;
FIG. 19 is a schematic diagram of a structure of a communication apparatus 1000 according to an embodiment of this application;
FIG. 20 is a schematic flowchart of a link state indication method in an NSTR link pair according to an embodiment of this application;
FIG. 21a is a schematic diagram of a frame format of an A-control subfield according to an embodiment of this application; and
FIG. 21b is a schematic diagram of another frame format of an A-control subfield according to an embodiment of this application.

### DESCRIPTION OF EMBODIMENTS

The following clearly and completely describes the technical solutions in embodiments of this application with reference to the accompanying drawings in embodiments of this application.

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

In the description of this application, the terms such as "first" and "second" do not limit a quantity or an execution sequence, and the terms such as "first" and "second" do not indicate a definite difference.

In this application, the term "example" or "for example" is used to represent giving an example, an illustration, or a description. Any embodiment or design scheme described as "example", "such as" or "for example" in this application should not be explained as being more preferred or having more advantages than another embodiment or design scheme. Exactly, use of the word "example", "in an example", "for example", or the like is intended to present a related concept in a specific manner.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

In this application, an element represented in a singular form is intended to represent "one or more", but does not represent "one and only one", unless otherwise specified.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

For ease of understanding the method provided in embodiments of this application, the following describes a system architecture of the method provided in embodiments of this application. It may be understood that the system architecture described in embodiments of this application is intended to describe the technical solutions in embodiments of this application more clearly, and does not constitute any limitation on the technical solutions provided in embodiments of this application.

The technical solutions provided in this application may be applied to a wireless communication system, for example, a wireless local area network system. The technical solutions provided in this application may be implemented by a communication device in the wireless communication system or a chip or a processor in the communication device. The communication device may be a wireless communication device that supports parallel transmission on a plurality of links. For example, the communication device may be referred to as a multi-link device (multi-link device, MLD) or a multi-band device. Compared with a communication device that supports only single-link transmission, the multi-link device has higher transmission efficiency and a larger throughput rate.

The multi-link device includes one or more affiliated stations (affiliated STA). The affiliated station is a logical station and may operate over a link, a frequency band, or a channel. The affiliated station may be an access point (access point, AP) or a non-access point station (non-access point station, non-AP STA). In 802.11be, a multi-link device whose affiliated station is an AP is referred to as an AP multi-link device (AP multi-link device, AP MLD), and a multi-link device whose affiliated station is a non-AP STA is referred to as a non-AP multi-link device (non-AP multi-link device, non-AP MLD).

Optionally, a multi-link device may include a plurality of logical stations. Each logical station operates over a link, but the plurality of logical stations are allowed to operate over a same link. During data transmission between an AP MLD and a non-AP MLD, a link identifier may be used to identify a link or a station on a link. Before communication, the AP MLD and the non-AP MLD may first negotiate or communicate for a correspondence between a link identifier and a link or a station on a link. Therefore, during data transmission, the link identifier is carried without transmitting a large amount of signaling information to indicate the link or the station on the link. This reduces signaling overheads and improves transmission efficiency.

In an example, a management frame, such as a beacon (beacon) frame or an association request frame, sent when the AP MLD establishes a basic service set (basic service set, BSS) carries one element, and the element includes a plurality of link identifier information fields. The link identifier information field may indicate a correspondence between a link identifier and a station that operates over a link corresponding to the link identifier. A link identifier information field includes a link identifier, and includes one or more of the following information: a medium access control (medium access control, MAC) address, an operating class, and a channel number. One or more of the MAC address, the operating class, and the channel number may indicate one link. For an AP, a MAC address of the AP is a basic service set identifier (basic service set identifier, BSSID) of the AP. In another example, in an association process between multi-link devices, an AP MLD and a non-AP MLD negotiate for a plurality of link identifier information fields. Multi-link association refers to one association between an AP of the AP MLD and a STA of the non-AP MLD. The association may facilitate separate association between a plurality of STAs of the non-AP MLD and a plurality of APs of the AP MLD, where one STA is associated with one AP. One or more STAs in the non-AP MLD may establish an association relationship with and then communicate with one or more APs in the AP MLD.

Optionally, the multi-link device may implement wireless communication in compliance with the IEEE 802.11 series protocols. For example, a station in compliance with the extremely high throughput, a station in compliance with IEEE 802.11be or is compatible with IEEE 802.11be implements communication with another device. Certainly, the another device may be a multi-link device, or may not be a multi-link device.

The technical solutions provided in this application may be applied to a scenario in which one node communicates with one or more nodes, a single-user uplink/downlink communication scenario, a multi-user uplink/downlink communication scenario, or a device-to-device (device to device, D2D) communication scenario. In embodiments of this application, the term "communication" may also be described as "data transmission", "information transmission", or "transmission". The term "transmission" may generally refer to sending and receiving.

Any one of the foregoing nodes may be an AP MLD, or may be a non-AP MLD. For example, the technical solutions provided in this application are applied to a scenario in which an AP MLD and a non-AP MLD communicate with each other. Optionally, one or more nodes in the foregoing nodes may be legacy stations that support transmission only on a single link. That is, in the foregoing communication scenario, in addition to a multi-link device, a single-link device, such as a single-link STA, may also be included.

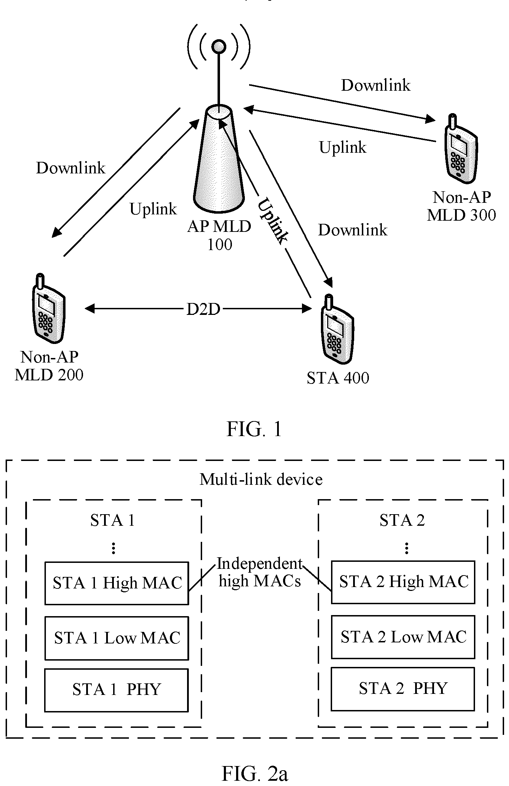

FIG. 1 is a schematic diagram of an architecture of a wireless communication system according to an embodiment of this application. As shown in FIG. 1, the wireless communication system includes at least one AP MLD (for example, an AP MLD 100 in FIG. 1) and at least one non-AP MLD (for example, a non-AP MLD 200 and a non-AP MLD 300 in FIG. 1). Optionally, FIG. 1 further includes a legacy station (for example, a single-link non-AP STA 400 in FIG. 1, also referred to as a STA 400) that supports transmission only on a single link. The AP MLD is a multi-link device that provides a service for the non-AP MLD, and the non-AP MLD may communicate with the AP MLD on a plurality of links, to implement improved throughput. An AP in the AP MLD may communicate with a STA in the non-AP MLD on a link. Certainly, (an AP in) the AP MLD may also provide a service for the legacy station, and (a STA in) the non-AP MLD may also perform peer-to-peer (peer-to-peer, P2P) communication with the legacy station. It may be understood that quantities of AP MLDs, non-AP MLDs, and legacy stations (namely, single-link non-AP STAs) in FIG. 1 are merely examples.

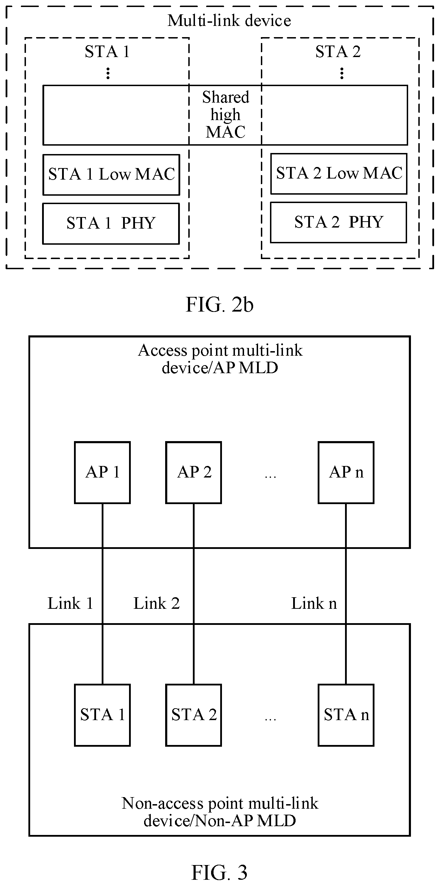

FIG. 2a is a schematic diagram of a structure of a multi-link device according to an embodiment of this application. The 802.11 standard focuses on an 802.11 physical layer (physical layer, PHY) part and a medium access control (medium access control, MAC) layer part in a multi-link device. As shown in FIG. 2a, a plurality of STAs included in the multi-link device are independent of each other at a low MAC (low MAC) layer and a PHY layer, and are also independent of each other at a high MAC (high MAC) layer. FIG. 2b is a schematic diagram of another structure of a multi-link device according to an embodiment of this application. As shown in FIG. 2b, a plurality of STAs included in the multi-link device are independent of each other at a low MAC (low MAC) layer and a PHY layer, and share a high MAC (high MAC) layer. Certainly, in a multi-link communication process, a non-AP MLD may use a structure with independent high MAC layers, and the AP MLD uses a structure with a shared high MAC layer; or the non-AP MLD may use a structure with a shared high MAC layer, and the AP MLD uses a structure with independent high MAC layers; or both the non-AP MLD and the AP MLD may use a structure with a shared high MAC layer; or both the non-AP MLD and the AP MLD may use a structure with independent high MAC layers. A schematic diagram of an internal structure of the multi-link device is not limited in embodiments of this application. FIG. 2a and FIG. 2b are merely examples for description. For example, the high MAC layer or the low MAC layer may be implemented by one processor in a chip system of the multi-link device, or may be implemented by different processing modules in a chip system.

For example, the multi-link device in embodiments of this application may be a single-antenna device, or may be a multi-antenna device. For example, the multi-link device may be a device with more than two antennas. The quantity of antennas included in the multi-link device is not limited in embodiments of this application.

FIG. 3 is a schematic diagram of multi-link communication according to an embodiment of this application. As shown in FIG. 3, an AP MLD includes n stations, which are an AP 1, an AP 2, ..., and an AP n. A non-AP MLD also includes n stations, which are a STA 1, a STA 2, ..., and a STA n. The AP MLD and the non-AP MLD may perform parallel communication on a link 1, a link 2, ..., and a link n. An AP in the AP MLD may establish an association relationship with a STA in the non-AP MLD. For example, the STA 1 in the non-AP MLD establishes an association relationship with the AP 1 in the AP MLD. The STA 2 in the non-AP MLD establishes an association relationship with the AP 2 in the AP MLD. The STA n in the non-AP MLD establishes an association relationship with the AP n in the AP MLD.

For example, a multi-link device (which may be a non-AP MLD or an AP MLD herein) is an apparatus having a wireless communication function. The apparatus may be an entire system device, or may be a chip, a processing system, or the like installed in an entire system device. A device in which the chip or the processing system is installed may implement the method and the function in embodiments of this application under the control of the chip or the processing system. For example, in embodiments of this application, a non-AP MLD has a wireless transceiver function, may support 802.11 series protocols, and may communicate with an AP MLD or another non-AP MLD. For example, the non-AP MLD is any user communication device that allows a user to communicate with an AP and communicate with a WLAN. For example, the non-AP MLD may be user equipment that can connect to a network, for example, a tablet computer, a desktop computer, a laptop computer, a notebook computer, an ultra-mobile personal computer (ultra-mobile personal computer, UMPC), a handheld computer, a netbook, a personal digital assistant (personal digital assistant, PDA), a mobile phone, an internet of things node in the internet of things, a vehicle-mounted communication apparatus in the internet of vehicles, or the like. The non-AP MLD may alternatively be a chip and a processing system in the foregoing terminals. The AP MLD in embodiments of this application is an apparatus that provides a service for the non-AP MLD, and may support the 802.11 series protocols. For example, the AP MLD may be a communication entity such as a communication server, a router, a switch, or a bridge, or the AP MLD may include a macro base station, a micro base station, a relay station, and the like in various forms. Certainly, the AP MLD may alternatively be a chip and a processing system in the devices in various forms. In this way, the method and the function in embodiments of this application are implemented.

It may be understood that the multi-link device may support high-rate and low-latency transmission. With continuous evolution of application scenarios of a wireless local area network, the multi-link device may be further applied to more scenarios, for example, a sensor node (such as a smart meter, a smart electricity meter, and a smart air detection node) in smart city, a smart device (such as a smart camera, a projector, a display, a television, a stereo, a refrigerator, and a washing machine) in smart home, a node in the internet of things, an entertainment terminal (such as AR, VR, or other wearable devices), a smart device (such as a printer and a projector) in smart office, an internet of vehicles device in the internet of vehicles, and some infrastructures (vehicles a vending machine, a self-service navigation station of a supermarket, a self-service cash register device, and a self-service ordering machine) in daily life scenarios. Specific forms of the non-AP MLD and the AP MLD are not limited in embodiments of this application, and are merely examples for description herein. The 802.11 protocol may be a protocol that supports the 802.11be or is compatible with that 802.11be.

The foregoing content briefly describes the system structure in embodiments of this application. To better understand the technical solutions of this application, the following briefly describes content related to this application.

### 1. Spatial stream (spatial stream) and antenna

A radio sends a plurality of signals at a same time, and each signal is referred to as a spatial stream. In a multiple-input multiple-output (multiple input multiple output, MIMO) system, a quantity of spatial streams is usually less than or equal to a quantity of antennas. If the quantity of antennas at a transmit end is different from that at a receive end, the quantity of spatial streams is less than or equal to a minimum quantity of antennas at the transmit end or the receive end. For example, a 4x4 (four transmit antennas and four receive antennas, also referred to as four inputs and four outputs) MIMO system may be used to transmit four or less spatial streams, and a 3x2 (three transmit antennas and two receive antennas) MIMO system may transmit two or less spatial streams.

Optionally, a relationship between an antenna and a spatial stream in a MIMO system may still be used in this application.

### 2. Process of communication between a non-AP MLD and an AP MLD in an EMLSR mode

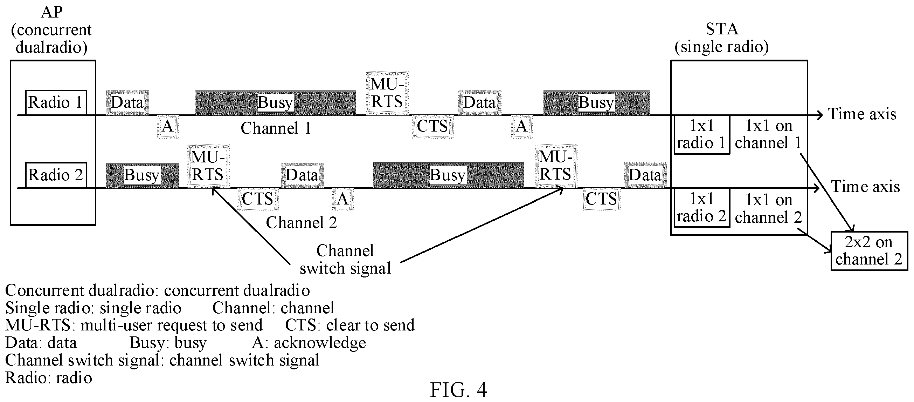

FIG. 4 is a schematic diagram of communication between a non-AP MLD and an AP MLD in an EMLSR mode. The non-AP MLD in the EMLSR mode performs receiving on each link through one antenna (or a single radio single radio). That is, the non-AP MLD in the EMLSR mode performs a listening operation (namely, CCA) on a channel through one antenna on each link. In addition, the non-AP MLD in the EMLSR mode can receive, on each link through one antenna, an initial control frame sent by the AP MLD in an OFDM PPDU type and a non-HT duplicate PPDU type, and reception of frames of other types is not supported. It should be understood that, when a transmit end uses one antenna for sending on a link, and a receive end also uses one antenna for reception on the link, a 1x1 (one input and one output) antenna configuration is provided for the link. When the transmit end uses two antennas for sending on a link and the receive end also uses two antennas for reception on the link, a 2x2 (two inputs and two outputs) antenna configuration is provided for the link. As shown in FIG. 4, the AP sends an initial control frame, for example, a multi-user (multi-user, MU) request-to-send (request to send, RTS) frame, on a channel 2 (channel 2, ch2 for short) through one antenna. The initial control frame includes a channel switch signal (channel switch signal), and the channel switch signal indicates a STA to switch an antenna for reception. The STA receives, on the channel 2 through one antenna, the initial control frame sent by the AP (in this case, a 1x1 antenna configuration is formed on the channel 2), replies with a clear to send (clear to send, CTS) frame on the channel 2, and switches, based on an indication of a channel switch signal in the initial control frame, a receive antenna (radio) on a channel 1 (channel 1, ch1 for short) to the channel 2 in a timely manner, to form a 2x2 antenna configuration, and then performs downlink data transmission on the channel 2 by using the 2x2 antenna configuration.

The initial control frame is in an OFDM PPDU format or a non-HT duplicate PPDU format, and a rate meets one of 6 Mbps, 12 Mbps, or 24 Mbps. The initial control frame is a multi-user (multi-user, MU) request-to-send (MU-RTS) frame or a buffer status report poll (buffer status report poll, BSRP) frame. The non-AP MLD operating in the EMLSR mode supports reception of an MU-RTS frame and a BSRP frame, and when the non-AP MLD in the EMLSR mode replies to an initial control frame (for example, a BSRP frame), only one spatial stream can be used.

Optionally, there may be two different antenna capability configurations for the non-AP MLD in the EMLSR mode. One is symmetric antenna capability configurations of the non-AP MLD in the EMLSR mode. To be specific, the antenna capability configurations are: One antenna is on each link, and a receive capability of each antenna is limited. That is, only some types of PPDUs can be received, that is, each antenna is a limited antenna. The other is asymmetric antenna capability configurations of the non-AP MLD in the EMLSR mode. To be specific, the antenna capability configurations are: One antenna is on each link; one antenna (referred to as a common antenna) has a stronger receive capability, which may be represented as: this antenna can receive all types of PPDUs; and another antenna (referred to as a limited antenna) has a weaker receive capability, that is, can receive only some types of PPDUs. A link on which a common antenna is located may be referred to as a receive full capability link (RX full capability link), and a link on which a limited antenna is located may be referred to as a receive limitation link (RX limitation link).

In this application, for ease of description, a "non-AP MLD (operating) in an EMLSR mode" is denoted as an "EMLSR non-AP MLD". In other words, the EMLSR non-AP MLD may indicate that (stations on) one or more links of the non-AP MLD enter the EMLSR mode. Similarly, "a station entering the EMLSR mode in the EMLSR non-AP MLD" may be denoted as an "EMLSR STA".

Based on the foregoing content and related description of the current standard, at least the following problems exist in the EMLSR mode.

For an AP MLD associated with an EMLSR non-AP MLD (for ease of description, the "AP MLD associated with the EMLSR non-AP MLD" is referred to as an "associated AP MLD" for short below), the entire EMLSR non-AP MLD or an EMLSR STA may be unavailable due to some reasons (for example, coexistence (coexistence) of different devices or different technologies). For example, an EMLSR STA in the EMLSR non-AP MLD communicates with another non-AP MLD or another single-link STA on a current link (that is, a link on which the EMLSR STA operates) by using a non-Wi-Fi technology such as Bluetooth. In this case, a resource of the current link is occupied. That is, the EMLSR STA is in a busy (busy) state, and an associated AP MLD cannot communicate with the EMLSR non-AP MLD on the link (for example, cannot send an initial control frame). In other words, when the entire EMLSR non-AP MLD is unavailable, the associated AP MLD cannot communicate with the EMLSR non-AP MLD. Similarly, when some links of the EMLSR non-AP MLD or STAs on these links are unavailable, the associated AP MLD cannot communicate with the EMLSR non-AP MLD on these links. However, according to an existing standard and technology, an AP MLD does not know whether an EMLSR non-AP MLD currently associated with the AP MLD is unavailable. Therefore, when the AP MLD wants to communicate with the EMLSR non-AP MLD or one or more STAs in the EMLSR non-AP MLD, the AP MLD sends an initial control frame to the EMLSR non-AP MLD or one or more STAs in the EMLSR non-AP MLD. However, because a link resource or an antenna resource is occupied, the EMLSR non-AP MLD or one or more STAs in the EMLSR non-AP MLD cannot correctly receive the initial control frame sent by the AP MLD, and therefore cannot respond to the initial control frame. The AP MLD may repeatedly send the initial control frame because the AP MLD does not receive a response to the initial control frame. Each time before sending the initial control frame, the AP MLD performs channel contention to obtain a channel resource to send the initial control frame. This causes a waste of resources.

For another example, if the EMLSR non-AP MLD wants to receive a group addressed frame (group addressed frame) of a next target beacon transmission time (target beacon transmission time, TBTT) of a link, the EMLSR non-AP MLD needs to switch an antenna/spatial stream on another link to the link for receiving before a next TBTT arrives. Alternatively, the AP MLD associated with the EMLSR non-AP MLD needs to advance at least one transition delay (transition delay) to stop frame exchange (frame exchange) initiated by the AP MLD on another link, so that the antenna/spatial stream on the another link can be switched to the link on which the group addressed frame is ready to be sent. However, according to an existing protocol, the AP MLD does not know the EMLSR non-AP MLD is ready to receive a group addressed frame of which link in which TBTT. Therefore, the AP MLD may send an initial control frame on some unavailable links within time in which the EMLSR non-AP MLD receives the group addressed frame, causing a waste of resources.

Embodiments of this application provide a link state indication method in an EMLSR mode. When an entire EMLSR non-AP MLD or EMLSR STA on a link of the EMLSR non-AP MLD is temporarily unavailable due to some reasons (for example, a plurality of devices or a plurality of technologies coexist, or the EMLSR non-AP MLD wants to receive a group addressed frame of a next TBTT on a link), the EMLSR non-AP MLD may notify an AP MLD associated with the EMLSR non-AP MLD of a state change of a link of the EMLSR non-AP MLD. When the entire EMLSR non-AP MLD ends unavailability, or the EMLSR STA on the link of the EMLSR non-AP MLD ends unavailability and is ready to resume to a listening mode (listening mode), the EMLSR non-AP MLD may also notify the associated AP MLD. Therefore, the AP MLD learns, in a timely manner, a state change of a link of the EMLSR non-AP MLD associated with the AP MLD, and the AP MLD does not send an initial control frame on an unavailable link of the EMLSR non-AP MLD, to reduce a waste of resources.

The following describes in detail the technical solutions provided in this application with reference to more accompanying drawings.

The technical solutions provided in this application are described by using a plurality of embodiments. For details, refer to the following description. It may be understood that the technical solutions described in embodiments of this application may be any combination to form a new embodiment, and parts that are related to a same or similar concept or solution may be mutually referenced or combined. The following separately describes the embodiments in detail.

It should be understood that both the AP MLD and the EMLSR non-AP MLD in this application support the 802.11be protocol (or referred to as the Wi-Fi 7 or EHT protocol), and may further support another WLAN communication protocol, for example, protocols such as 802.11ax and 802.11ac. It should be understood that the AP MLD and the EMLSR non-AP MLD in this application may further support a next-generation protocol of 802.11be. That is, the method provided in this application is applicable to not only the 802.11be protocol, but also a next-generation protocol of 802.11be.

Optionally, "disabled", "unavailable", and the like in this application are all for the AP MLD. For example, "the EMLSR non-AP MLD is disabled" in this application means that the EMLSR non-AP MLD cannot be used for an associated AP MLD; or an associated AP MLD cannot communicate with the EMLSR non-AP MLD; or for an associated AP MLD, the EMLSR non-AP MLD does not receive or reply to an uplink trigger frame. However, the EMLSR non-AP MLD may communicate with another non-AP MLD or a single-link STA. That is, the EMLSR non-AP MLD is still available for another non-AP MLD or a single-link STA. Similarly, "the EMLSR link is disabled" and "the unavailable link of the EMLSR non-AP MLD" in this application mean that these links are unavailable or occupied for the associated AP MLD; or the associated AP MLD cannot communicate with the EMLSR non-AP MLD on these links; or for the associated AP MLD, the EMLSR non-AP MLD cannot receive or reply to an uplink trigger frame on these links. However, the EMLSR non-AP MLD may communicate with another non-AP MLD or a single-link STA on these links. That is, these links of the EMLSR non-AP MLD are still available for another non-AP MLD or a single-link STA.

Optionally, a non-AP MLD operates in the EMLSR mode on a specified set of enabled links between the non-AP MLD and the AP MLD associated with the non-AP MLD (A non-AP MLD may operate in the EMLSR mode on a specified set of the enabled links between the non-AP MLD and its associated AP MLD). The specified set of enabled links in which the EMLSR mode is applied is referred to as EMLSR links (The specified set of the enabled links in which the EMLSR mode is applied is called EMLSR links). In other words, the "EMLSR link (EMLSR link)" in this application may be a link used by the non-AP MLD for the EMLSR mode, or a link that enters the EMLSR mode in the non-AP MLD, or a link on which a listening operation (listening operation) is performed or a link in a listening mode (listening mode) in the non-AP MLD, or the like.

### Embodiment 1

This embodiment of this application mainly describes how an EMLSR non-AP MLD notifies an AP MLD associated with the EMLSR non-AP MLD when the entire EMLSR non-AP MLD is temporarily unavailable due to some reasons; and/or how the EMLSR non-AP MLD notifies the AP MLD associated with the EMLSR non-AP MLD when the entire EMLSR non-AP MLD ends unavailability, or an EMLSR STA on a link of the EMLSR non-AP MLD ends unavailability and is ready to resume to a listening mode (listening mode).

For example, a reason why the entire EMLSR non-AP MLD is unavailable may be: the EMLSR non-AP MLD has only two links, and an antenna of one link is switched to another link to communicate with another non-AP MLD or a STA. In this case, for the AP MLD, the entire EMLSR non-AP MLD is unavailable. Alternatively, the EMLSR non-AP MLD has a plurality of links. EMLSR STAs on some links are unavailable, and capabilities of EMLSR STAs on remaining links are also affected. An initial control frame sent by an AP MLD cannot be correctly received. The reason why the entire EMLSR non-AP MLD is unavailable is not limited in this application.

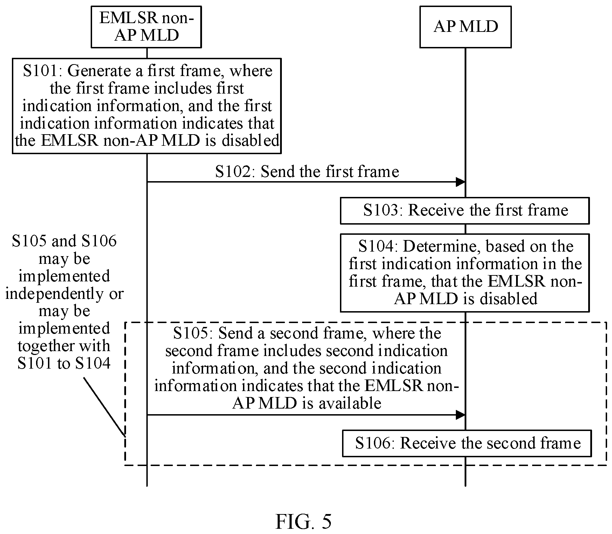

FIG. 5 is a first schematic flowchart of a link state indication method in an EMLSR mode according to an embodiment of this application. In this embodiment of this application, antenna capability configurations of the EMLSR non-AP MLD may be symmetric or asymmetric. This is not limited in this embodiment of this application. As shown in FIG. 5, the link state indication method in the EMLSR mode includes but is not limited to the following steps.

S101: The EMLSR non-AP MLD generates a first frame, where the first frame includes first indication information, and the first indication information indicates that the EMLSR non-AP MLD is disabled.

S102: The EMLSR non-AP MLD sends the first frame.

Optionally, when the EMLSR non-AP MLD finds that all links (or STAs on all links) of the EMLSR non-AP MLD are to be unavailable for an AP MLD associated with the EMLSR non-AP MLD (for example, the EMLSR non-AP MLD has only two links, and an antenna of one link is to be switched to another link to communicate with another non-AP MLD or a STA), the EMLSR non-AP MLD may generate the first frame. The first frame may carry the first indication information indicating that the EMLSR non-AP MLD is disabled (disabled). The EMLSR non-AP MLD sends the first frame on any available link. It should be understood that, after the EMLSR non-AP MLD sends the first frame, or after a period of time after the EMLSR non-AP MLD sends the first frame, the entire EMLSR non-AP MLD is unavailable for the AP MLD associated with the EMLSR non-AP MLD.

The first frame may be a data frame.

S103: The AP MLD receives the first frame.

S104: The AP MLD determines, based on the first indication information in the first frame, that the EMLSR non-AP MLD is disabled.

Optionally, the AP MLD associated with the EMLSR non-AP MLD receives the first frame, and determines, based on the first indication information carried in the first frame, that the EMLSR non-AP MLD is disabled. After the AP MLD determines that the EMLSR non-AP MLD is disabled, the AP MLD may not send an initial control frame to the EMLSR non-AP MLD until the EMLSR non-AP MLD resumes being available. In other words, when the AP MLD receives the notification indicating that the EMLSR non-AP MLD enters an unavailable state (that is, the AP MLD receives the first frame that carries the first indication information), the AP MLD does not send an initial control frame to the EMLSR non-AP MLD until the AP MLD receives a notification indicating that the EMLSR non-AP MLD resumes being available.

In this embodiment of this application, when the EMLSR non-AP MLD is temporarily unavailable due to some reasons, a state (available or unavailable/disabled) of a link of the EMLSR non-AP MLD is actively reported, so that the AP MLD can learn of, in a timely manner, a state change of a link of the EMLSR non-AP MLD associated with the AP MLD, and the AP MLD does not send a signal, for example, an initial control frame, to the EMLSR non-AP MLD on an unavailable link of the EMLSR non-AP MLD, to reduce a waste of resources. In addition, in this embodiment of this application, a notification needs to be sent only once on one link, to reduce overheads.

In an optional embodiment, after the EMLSR non-AP MLD is temporarily unavailable due to some reasons, the AP MLD cannot communicate with the EMLSR non-AP MLD. On the contrary, the AP MLD can communicate with the EMLSR non-AP MLD only after (a link of) the EMLSR non-AP MLD resumes. However, according to the existing protocol, the AP MLD does not know whether the EMLSR non-AP MLD resumes being available. Therefore, when data of the EMLSR non-AP MLD exists in a buffer of the AP MLD, the AP MLD may keep waiting. The AP MLD does not know whether the EMLSR non-AP MLD resumes being available, and consequently the AP MLD and the EMLSR non-AP MLD cannot communicate normally.

Therefore, in this embodiment of this application, after resuming being available, the EMLSR non-AP MLD may actively notify the AP MLD, so that the AP MLD can normally communicate with the EMLSR non-AP MLD.

Optionally, this embodiment of this application (step S105 and step S106 in the following) may be separately implemented. Certainly, this embodiment of this application may be alternatively implemented with reference to the foregoing embodiment (step S101 to step S104), and FIG. 5 is reused. When this embodiment of this application is implemented together with the foregoing embodiment, this embodiment of this application may be performed after step S104, or may be performed before step S101. This is not limited in this embodiment of this application.

The link state indication method in the EMLSR mode provided in this embodiment of this application further includes the following steps.

S105: The EMLSR non-AP MLD sends a second frame, where the second frame includes second indication information, and the second indication information indicates that the EMLSR non-AP MLD is available.

S106: The AP MLD receives the second frame.

Optionally, after the EMLSR non-AP MLD enters the unavailable state, if the EMLSR non-AP MLD finds that a link of the EMLSR non-AP MLD resumes being available or the entire EMLSR non-AP MLD resumes being available, the EMLSR non-AP MLD may send the second frame to the AP MLD on the link that resumes being available. Correspondingly, the AP MLD receives the second frame on the link that resumes being available. The second frame may include the second indication information. The second indication information may indicate that (a link of) the EMLSR non-AP MLD is available (available), or the second indication information indicates that (a link of) the EMLSR non-AP MLD resumes (resume), or the second indication information indicates that (a link of) the EMLSR non-AP MLD switches back to a listening operation (switch back to listening operation). The second frame may be a data frame.

Optionally, after the EMLSR non-AP MLD sends the second frame, that is, after the EMLSR non-AP MLD sends a notification indicating that the EMLSR non-AP MLD resumes to an available state, a STA in the EMLSR non-AP MLD may immediately switch to a listening mode (listening mode), or switch to the listening mode after specified time T (for example, a short interframe space (short interframe space, SIFS)). If the link that resumes being available in the EMLSR non-AP MLD is a receive limitation link, the AP MLD that receives the notification should wait for at least one transition delay (transition delay) (specific waiting duration may be a transition delay+specified time T) before sending an initial control frame to an EMLSR STA that resumes being available. If the link that resumes being available in the EMLSR non-AP MLD is a receive full capability link, the AP MLD that receives the notification may directly send, without waiting, an initial control frame to the EMLSR STA that resumes being available, or send, after the specified time T, an initial control frame to the EMLSR STA that resumes being available.

Optionally, if antenna capability configurations of the EMLSR non-AP MLD are asymmetric, and the receive full capability link of the EMLSR non-AP MLD is available, the AP MLD may send, to the EMLSR non-AP MLD, an MU-RTS frame or a BSRP frame that carries indication information, to indicate whether the MU-RTS frame or the BSRP frame is an initial control frame, or indicate whether the MU-RTS frame or the BSRP frame received by a station is an initial control frame. Specifically, for a possible implementation of the indication information, refer to the following description in Embodiment 4 and Embodiment 5. Details are not described herein.

In this embodiment of this application, when the entire EMLSR non-AP MLD ends unavailability, or an EMLSR STA on a link of the EMLSR non-AP MLD ends unavailability and is ready to resume to the listening mode (listening mode), the AP MLD is notified by using the second indication information, so that the AP MLD learns of an available link of the EMLSR non-AP MLD in a timely manner, and the AP MLD schedules the EMLSR non-AP MLD to perform uplink transmission or sends downlink data to the EMLSR non-AP MLD.

The foregoing describes possible procedures of this embodiment of this application. The following separately describes possible implementations of the first indication information and the second indication information.

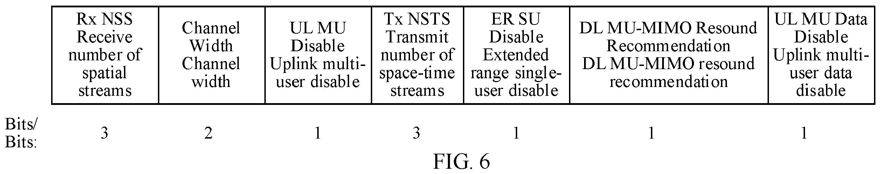

It may be understood that, for a single-link device, a multi-device or multi-technology coexistence (coexistence) problem may be resolved by using an operating mode (operating mode, OM) control (control) subfield. Specifically, before communicating with another station, a single-link STA may notify, by adding the OM control subfield to a data frame, an AP associated with the STA of a type of trigger-based uplink multi-user transmission currently supported by the STA. FIG. 6 is a schematic diagram of a frame format of an OM control subfield according to an embodiment of this application. As shown in FIG. 6, the OM control subfield includes but is not limited to an uplink (uplink, UL) multi-user (multi-user, MU) disable (UL MU Disable) subfield and an uplink multi-user data disable (UL MU Data Disable) subfield. The UL MU disable (uplink multi-user disable) subfield and the UL MU data disable (uplink multi-user data disable) subfield may collaboratively/jointly indicate whether a single-link non-AP STA can respond to different types of trigger frames sent by an AP end. Specifically, when the UL MU disable subfield is set to 0, and the UL MU data disable subfield is also set to 0, it indicates that the STA allows and replies to all types of trigger frames. When the UL MU disable subfield is set to 0, and the UL MU data disable subfield is set to 1, it indicates that if the STA receives a basic trigger frame (basic trigger frame), the STA does not reply with an uplink multi-user data frame (UL MU Data frame), but if the STA receives a trigger frame of another type, the STA may perform uplink multi-user transmission. When the UL MU disable subfield is set to 1, and the UL MU data disable subfield is set to 0, it indicates that the STA does not perform uplink multi-user transmission regardless of a type of trigger frame received by the STA. When the UL MU disable subfield is set to 1, and the UL MU data disable subfield is set to 1, the subfields are reserved.

In a first implementation, the first indication information and the second indication information may be represented by using different values of a same field.

Specifically, the first indication information and the second indication information may be located in an EHT OM control subfield of a high throughput (high throughput, HT) control field. The EHT OM control subfield is an extension of an OM control subfield in the EHT background. For example, a reserved bit in the EHT OM control subfield may be used as a subfield, and different values of the subfield may indicate the first indication information and the second indication information. For ease of description, the newly added subfield in the EHT OM control subfield is referred to as a multi-link device disable/resume (MLD Disable/Resume) subfield. Certainly, the newly added subfield may also have another name. This is not limited in this embodiment of this application. It may be understood that the UL MU disable subfield and the UL MU data disable subfield in the OM control subfield may indicate whether the STA responds to some trigger frames in a single-link case. Therefore, a use rule of the MLD disable/resume subfield needs to be distinguished from that in the single-link case.

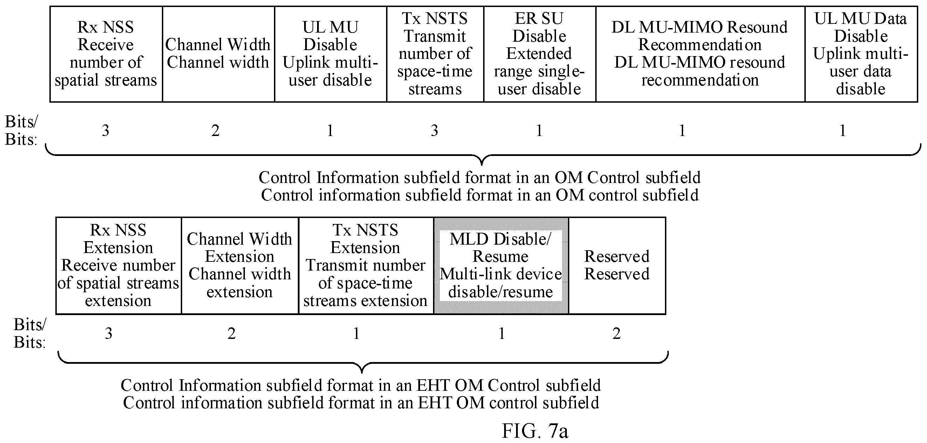

FIG. 7a is a schematic diagram of a frame format of the OM control subfield and the EHT OM control subfield in the HT control field according to an embodiment of this application. As shown in FIG. 7a, the EHT OM control subfield includes but is not limited to a 1-bit MLD disable/resume subfield. When the MLD disable/resume subfield is set to 1, it indicates the first indication information, and indicates that the EMLSR non-AP MLD is disabled (disabled). In this case, all or a part of the OM control subfield may be reserved in the HT control field. If the UL MU disable subfield and the UL MU data disable subfield exist, both the UL MU disable subfield and the UL MU data disable subfield are set to 1. Certainly, in this case, the HT control field may not include the OM control subfield.

When the MLD disable/resume subfield is set to 0, it indicates the second indication information, and indicates that all links of the EMLSR non-AP MLD are available (available), or indicates that all links of the EMLSR non-AP MLD resume (resume) from an unavailable state, or indicates that all links of the EMLSR non-AP MLD switch back to a listening operation (switch back to listening operation). In this case, all or a part of the OM control subfield may be reserved in the HT control field. If the UL MU disable subfield and the UL MU data disable subfield exist, both the UL MU disable subfield and the UL MU data disable subfield are set to 1. Certainly, in this case, the HT control field may not include the OM control subfield.

Optionally, the HT control field includes the OM control subfield and the EHT OM control subfield. The OM control subfield includes the UL MU disable subfield and the UL MU data disable subfield, and the EHT OM control subfield includes the MLD disable/resume subfield. When the MLD disable/resume subfield is set to 0, and both the UL MU disable subfield and the UL MU data disable subfield are set to 0, the subfields jointly indicate that a first link of the EMLSR non-AP MLD is available (resumes from unavailability), or jointly indicate that the first link of the EMLSR non-AP MLD switches back to the listening operation. The first link is a link used by the EMLSR non-AP MLD to send the second frame. That is, when the MLD disable/resume subfield is set to 0, and both the UL MU disable subfield and the UL MU data disable subfield are set to 0, it indicates that a link of the EMLSR non-AP MLD resumes from an unavailable state, and this link is a link for sending the second frame.

It should be understood that, when the OM control subfield indicates different behaviors of a STA in a single-link case, that is, when an original function of the STA is implemented, the EHT OM control subfield may not include the MLD disable/resume subfield.

It should be further understood that names and lengths of subfields in the frame format shown in FIG. 7a are examples. This is not limited in this embodiment of this application.

In this embodiment of this application, a 1-bit MLD disable/resume subfield is added to the EHT OM control subfield of the HT control field, to indicate that the EMLSR non-AP MLD is disabled and the EMLSR non-AP MLD resumes from unavailability to the listening mode, so that the AP MLD can learn of, in a timely manner, a state change of a link of the EMLSR non-AP MLD associated with the AP MLD, and the AP MLD does not send an initial control frame on an unavailable link of the EMLSR non-AP MLD, to reduce a waste of resources.

In a second implementation, the first indication information and the second indication information are implemented by using different fields.

Specifically, the first indication information and the second indication information can be located in an EHT OM control subfield of an HT control field. For example, the first indication information may be carried in a reserved bit in the EHT OM control subfield. For ease of description, the reserved bit is referred to as a multi-link device disable (MLD Disable) subfield. Certainly, the reserved bit may also have another name. This is not limited in this embodiment of this application. The second indication information is carried in another reserved bit in the EHT OM control subfield. For ease of description, the reserved bit is referred to as a multi-link device resume (MLD Resume) subfield. Certainly, the reserved bit may also have another name. This is not limited in this embodiment of this application.

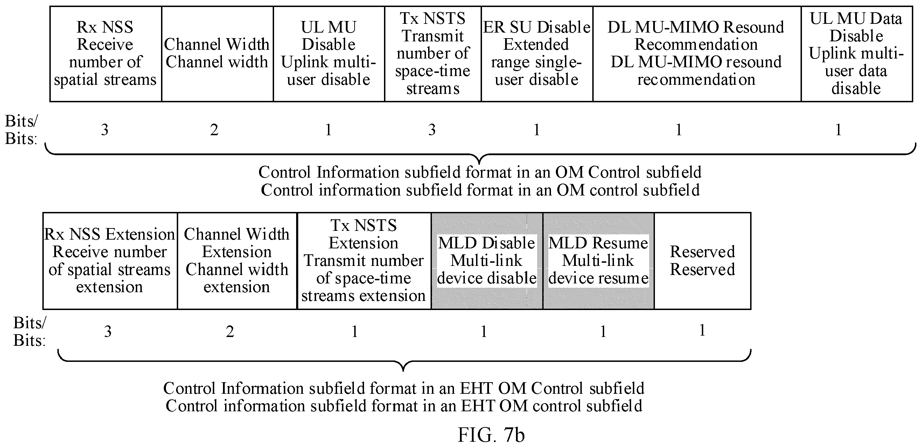

FIG. 7b is a schematic diagram of another frame format of the OM control subfield and the EHT OM control subfield in the HT control field according to an embodiment of this application. As shown in FIG. 7b, the EHT OM control subfield includes but is not limited to a 1-bit MLD disable subfield (namely, the first indication information) and a 1-bit MLD resume subfield (namely, the second indication information). When the MLD disable subfield is set to 1, it indicates that the EMLSR non-AP MLD is disabled (disabled). In this case, all or a part of the OM control subfield may be reserved in the HT control field. If a UL MU disable subfield and a UL MU data disable subfield exist, both the UL MU disable subfield and the UL MU data disable subfield are set to 1. Certainly, in this case, the HT control field may not include the OM control subfield. Optionally, when the MLD disable subfield is set to 0, it indicates that the subfield is reserved.

When the MLD resume subfield is set to 1, it indicates that all links of the EMLSR non-AP MLD are available (available), or indicates that all links of the EMLSR non-AP MLD resume (resume) from an unavailable state, or indicates that all links of the EMLSR non-AP MLD switch back to a listening operation (switch back to listening operation). In this case, all or a part of the OM control subfield may be reserved in the HT control field. If a UL MU disable subfield and a UL MU data disable subfield exist, both the UL MU disable subfield and the UL MU data disable subfield are set to 1. Certainly, in this case, the HT control field may not include the OM control subfield. Optionally, when the MLD resume subfield is set to 0, it indicates that the subfield is reserved.

Optionally, the HT control field includes the OM control subfield and the EHT OM control subfield. The OM control subfield includes a UL MU disable subfield and a UL MU data disable subfield, and the EHT OM control subfield includes an MLD disable subfield and an MLD resume subfield. When the MLD resume subfield is set to 1, and both the UL MU disable subfield and the UL MU data disable subfield are set to 0, the subfields jointly indicate that a first link of the EMLSR non-AP MLD is available (resumes from unavailability), or jointly indicate that the first link of the EMLSR non-AP MLD switches back to the listening operation. The first link is a link used by the EMLSR non-AP MLD to send the second frame. That is, when the MLD resume subfield is set to 1, and both the UL MU disable subfield and the UL MU data disable subfield are set to 0, it indicates that a link of the EMLSR non-AP MLD resumes from an unavailable state, and this link is a link for sending the second frame.

It should be understood that, when the OM control subfield indicates different behaviors of a STA in a single-link case, that is, when an original function of the STA is implemented, the EHT OM control subfield may not include the MLD disable subfield or the MLD resume subfield.

It should be further understood that names and lengths of subfields in the frame format shown in FIG. 7b are examples. This is not limited in this embodiment of this application.

In this embodiment of this application, a 1-bit MLD disable subfield is added to the EHT OM control subfield to indicate that the EMLSR non-AP MLD is disabled, and a 1-bit resume subfield is further added to indicate that the EMLSR non-AP MLD resumes from unavailability to the listening mode. Meanings of the subfields are clear.

### Embodiment 2

This embodiment of this application mainly describes how an EMLSR non-AP MLD explicitly notifies an AP MLD associated with the EMLSR non-AP MLD when the EMLSR non-AP MLD or an EMLSR STA on a link of the EMLSR non-AP MLD is temporarily unavailable due to some reasons, or when the EMLSR STA ends unavailability and is ready to resume to a listening mode (listening mode).

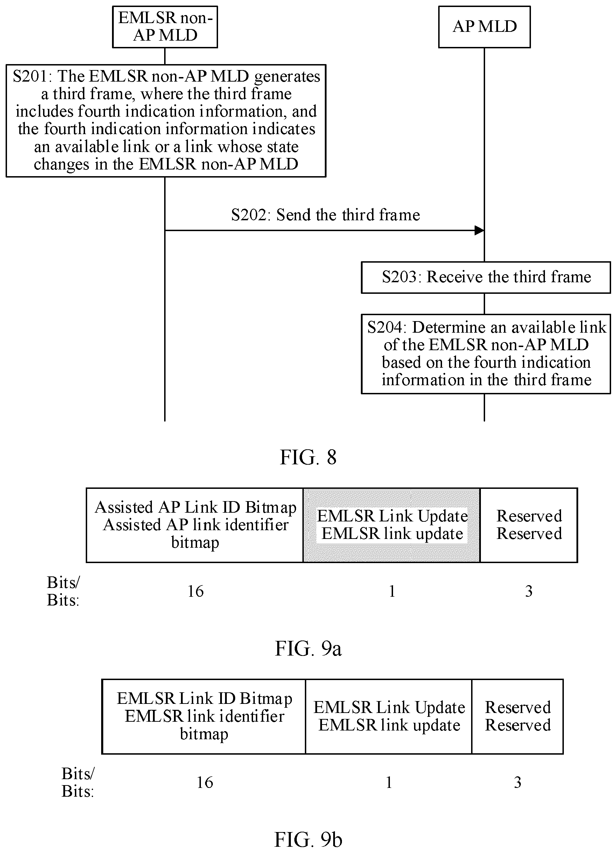

FIG. 8 is a second schematic flowchart of a link state indication method in an EMLSR mode according to an embodiment of this application. In this embodiment of this application, antenna capability configurations of the EMLSR non-AP MLD may be symmetric or asymmetric. This is not limited in this embodiment of this application. As shown in FIG. 8, the link state indication method in the EMLSR mode includes but is not limited to the following steps.

S201: The EMLSR non-AP MLD generates a third frame, where the third frame includes fourth indication information, and the fourth indication information indicates an available link or a link whose state changes in the EMLSR non-AP MLD.

S202: The EMLSR non-AP MLD sends the third frame.

Optionally, when the EMLSR non-AP MLD finds that states of all or some links of the EMLSR non-AP MLD change, for example, for an AP MLD associated with the EMLSR non-AP MLD, (a station on) at least one link of the EMLSR non-AP MLD is unavailable or resumes from unavailability to a listening mode, the EMLSR non-AP MLD may generate the third frame. The third frame may carry the fourth indication information, and optionally, may further carry third indication information. The third indication information may indicate that a state of a link of the non-AP MLD changes, and the non-AP MLD is a non-AP MLD that supports an EMLSR mode. The fourth indication information may indicate an available link or a link whose state changes in the EMLSR non-AP MLD. The EMLSR non-AP MLD may further send the third frame on any available link. Optionally, the state of the link of the EMLSR non-AP MLD changes only after the EMLSR non-AP MLD sends the third frame or after a period of time after the EMLSR non-AP MLD sends the third frame. Alternatively, the state of the link of the EMLSR non-AP MLD may change before the EMLSR non-AP MLD sends the third frame or before a period of time before the EMLSR non-AP MLD sends the third frame.

Optionally, the state change of the link of the non-AP MLD includes but is not limited to: The EMLSR link is disabled, and an unavailable link of the EMLSR non-AP MLD changes to an available EMLSR link.

To better understand the indication manners of the third indication information and the fourth indication information, the following describes possible implementations of the third indication information and the fourth indication information by using examples.

### Implementation 1

The third indication information may indicate that a state of a link of the non-AP MLD changes, and the fourth indication information may indicate an available link (EMLSR link) of the EMLSR non-AP MLD. For example, the fourth indication information may indicate an available link of the EMLSR non-AP MLD by using a bitmap. That is, one bit in the bitmap corresponds to one link. When a bit in the bitmap is set to 1, it indicates that a link corresponding to the bit is an available link. Alternatively, the fourth indication information may indicate an available link of the EMLSR non-AP MLD by using a link identifier (link ID). That is, a link identified by the link identifier is an available link. This is not limited in this embodiment of this application.

Optionally, the third indication information and the fourth indication information can be located in an AP assistance request (AP assistance request, AAR) control subfield of an HT control field. For example, a reserved bit in the AAR control subfield may indicate whether a state of a link of the EMLSR non-AP MLD changes. For ease of description, the reserved bit may be referred to as an EMLSR link update (EMLSR Link Update) subfield. An assisted AP link identifier bitmap (Assisted AP Link ID Bitmap) in the AAR control subfield may be reused to indicate a specific available link of the EMLSR non-AP MLD.

FIG. 9a is a schematic diagram of a frame format of the AAR control subfield according to an embodiment of this application. As shown in FIG. 9a, the AAR control subfield includes but is not limited to a 16-bit assisted AP link identifier bitmap (Assisted AP Link ID Bitmap) and a 1-bit EMLSR link update (EMLSR Link Update) subfield. When the EMLSR link update subfield is set to 1 (namely, the third indication information), it indicates that a state of a link of the non-AP MLD changes. That is, the link may be unavailable or resume being available. If the EMLSR link update subfield is set to 0, it indicates that a state of a link does not change. It should be understood that, whether the EMLSR link update subfield is set to 0 to indicate that a state of a link changes, or is set to 1 to indicate that a state of a link changes is not limited in this embodiment of this application. When the EMLSR link update subfield is set to 1, a link corresponding to a bit that is set to 1 in the assisted AP link ID bitmap (namely, the fourth indication information) is an available link of the EMLSR non-AP MLD. It should be understood that, if all bits in the assisted AP link ID bitmap are 0, it indicates that all links of the EMLSR non-AP MLD are unavailable, or no available link exists. That is, a quantity of available links of the EMLSR non-AP MLD is 0, or the entire EMLSR non-AP MLD is unavailable.

In this embodiment of this application, an indication (namely, the EMLSR link update subfield) indicating that a state of a link of the non-AP MLD changes is added to the AAR control subfield, and the assisted AP link ID bitmap is reused, but a meaning of the assisted AP link ID bitmap is modified to indicate an available link of the EMLSR non-AP MLD. No new frame format or procedure needs to be designed, to reduce signaling overheads.

Optionally, the third indication information and the fourth indication information can be located in an aggregated-control (Aggregated-control, A-control) subfield. For example, an A-control subfield variant (variant) may be redesigned to carry the third indication information and the fourth indication information.

FIG. 9b is a schematic diagram of a frame format of the A-control subfield according to an embodiment of this application. As shown in FIG. 9b, the A-control subfield includes but is not limited to a 16-bit EMLSR link identifier bitmap (EMLSR Link ID Bitmap) and a 1-bit EMLSR link update (EMLSR Link Update) subfield. For a value and a meaning of the EMLSR link update subfield, refer to the foregoing description in FIG. 9a. Details are not described herein again. When the EMLSR link update subfield is set to 1, a link corresponding to a bit that is set to 1 in the EMLSR link ID bitmap (namely, the fourth indication information) is an available link of the EMLSR non-AP MLD. It should be understood that, if all bits in the EMLSR link ID bitmap are 0, it indicates that there is no available link in the EMLSR non-AP MLD. That is, a quantity of available links of the EMLSR non-AP MLD is 0, or the entire EMLSR non-AP MLD is unavailable. It should be further understood that whether a bit with a value 0 in the EMLSR link ID bitmap represents an available link or a bit with a value 1 represents an available link is not limited in this embodiment of this application.

In this embodiment of this application, the new A-control subfield is designed to carry the third indication information and the fourth indication information. Meanings of the A-control subfield are clear, and a conventional station does not misread the A-control subfield (because the conventional station does not understand the newly designed A-control subfield).

Optionally, the third indication information and the fourth indication information can be located in an EML control field of an EML operating mode notification (operating mode notification, OMN) frame, and an EMLSR mode subfield included in the EML control field is set to 1. That is, the third frame is an EML OMN frame. For example, a reserved bit in the EML control subfield may indicate whether a state of a link of the EMLSR non-AP MLD changes. For ease of description, the reserved bit may be referred to as an EMLSR link update (EMLSR Link Update) subfield. An EMLSR link bitmap (EMLSR link bitmap) in the EML control subfield may be reused to indicate a specific available link of the EMLSR non-AP MLD.

Further, optionally, because the EML control field is extensible, the EMLSR non-AP MLD may further use the third frame to carry some related information, for example, start time of a state change, and a specific capability of an EMLSR STA in an available state. In other words, the EML OMN frame (namely, the third frame) that carries the third indication information and the fourth indication information may further include one or more of the following information: start time at which a state of a link changes, transmit and receive capabilities of a currently available link of the EMLSR non-AP MLD, and the like.

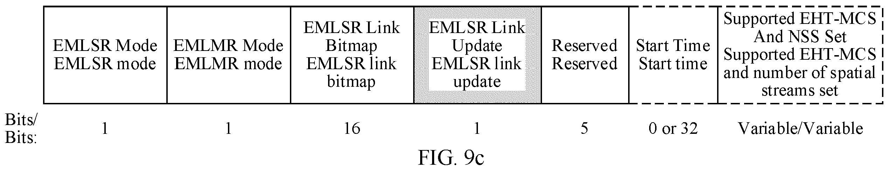

FIG. 9c is a schematic diagram of a frame format of the EML control field according to an embodiment of this application. As shown in FIG. 9c, the EML control field includes but is not limited to: a 1-bit EMLSR mode (EMLSR mode) subfield, a 16-bit EMLSR link bitmap (EMLSR Link Bitmap), and a 1-bit EMLSR link update (EMLSR Link Update) subfield. The EMLSR mode subfield is set to 1. For a value and a meaning of the EMLSR link update subfield, refer to the foregoing description in FIG. 9a. Details are not described herein again. For a value and a meaning of the EMLSR link bitmap, refer to the related description of the EMLSR link ID bitmap in FIG. 9b. Details are not described herein again. As shown in FIG. 9c, the EML control field may further include: a start time (start time) subfield, and/or a supported EHT-MCS (modulation and coding scheme, Modulation and coding strategy) and NSS (number of spatial streams, Number of spatial streams) set (Supported EHT-MCS And NSS Set) subfield. The start time subfield indicates start time at which a state of a link changes. The supported EHT-MCS and NSS set subfield indicates specific transmit and receive capabilities of a currently available link. A design of the supported EHT-MCS and NSS set subfield may be based on Section 9.4.2.313.1 in 802.11be D1.4, and details are not described herein.

In this embodiment of this application, the EML control field of the EML OMN frame (namely, the third frame) carries the third indication information and the fourth indication information. Because the EML control field is extensible, some optional information may be further carried. Implementation of the EML OMN frame is more flexible, and more information can be carried.

It should be understood that names, sequences, and lengths of the subfields shown in FIG. 9a to FIG. 9c are examples. This is not limited in this embodiment of this application.

In an optional embodiment, the EMLSR non-AP MLD generates and sends the third frame. The third frame includes the third indication information, and the third indication information indicates whether a state of a link of the EMLSR non-AP MLD changes. When the third indication information indicates that a state of a link of the EMLSR non-AP MLD changes, the third frame further includes the fourth indication information, and the fourth indication information indicates an available link of the EMLSR non-AP MLD. For the third indication information, refer to the related description of the EMLSR link update subfield in Implementation 1. For the fourth indication information, refer to the related description in Implementation 1. Details are not described herein again.

### Implementation 2

If the state change of the link of the non-AP MLD is that the EMLSR link is disabled, the third indication information specifically indicates that the EMLSR link is disabled, or indicates that one or more EMLSR links are no longer members of EMLSR links and are not used by the non-AP MLD for the EMLSR mode (indicate that one or more EMLSR link will not be used by the non-AP MLD for the EMLSR mode and will not be a member of the EMLSR links). Correspondingly, the fourth indication information may indicate an available link of the EMLSR non-AP MLD or a disabled EMLSR link of the EMLSR non-AP MLD. If the state change of the link of the non-AP MLD is that an unavailable link in the EMLSR non-AP MLD changes to an available EMLSR link, the third indication information specifically indicates that there is an unavailable link that changes to (or resumes to) an available EMLSR link in the EMLSR non-AP MLD, or indicates that there is an unavailable link that switches back to a listening operation in the EMLSR non-AP MLD, or indicates that one or more EMLSR links are to be used by the non-AP MLD for the EMLSR mode and are members of the EMLSR links, or switch back to listening (indicate that one or more EMLSR link will not be used by the non-AP MLD for the EMLSR mode and will not be a member of the EMLSR links). Correspondingly, the fourth indication information may indicate an available link of the EMLSR non-AP MLD, or an EMLSR link that changes from unavailable to available in the EMLSR non-AP MLD.

For example, the fourth indication information may be a bitmap, and one bit of the fourth indication information corresponds to one link. When a bit in the fourth indication information is set to a first value, it indicates that a link corresponding to the bit is an available link or a link whose state changes. When a bit in the fourth indication information is set to a second value, it indicates that a link corresponding to the bit is an unavailable link or a link whose state does not change. The first value may be 1, and the second value may be 0; or the first value is 0, and the second value is 1. This is not limited in this embodiment of this application. For example, the fourth indication information may also be represented by a link identifier (link ID).

Optionally, the third indication information may be represented by two subfields. One subfield indicates that there is an EMLSR link disabled, and the other subfield indicates that there is an unavailable link that changes to an available EMLSR link in the EMLSR non-AP MLD. In other words, the third indication information may specifically indicate that there is an EMLSR link disabled and there is no unavailable link that changes to an available EMLSR link in the EMLSR non-AP MLD. Alternatively, the third indication information may specifically indicate that there is no EMLSR link disabled and there is an unavailable link that changes to an available EMLSR link in the EMLSR non-AP MLD. Alternatively, the third indication information may specifically indicate that there is an EMLSR link disabled and there is an unavailable link that changes to an available EMLSR link in the EMLSR non-AP MLD. In this case, the fourth indication information indicates an available link of the EMLSR non-AP MLD.

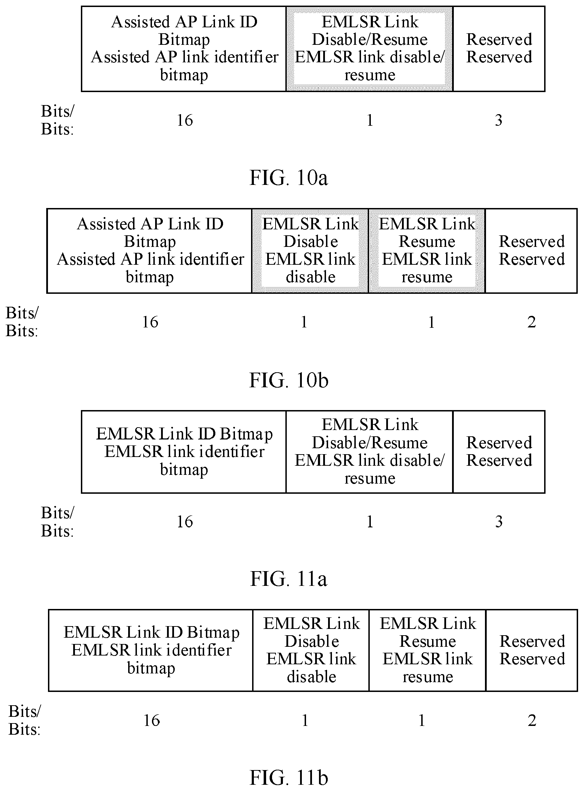

Optionally, the third indication information and the fourth indication information are located in an AP assistance request (AP assistance request, AAR) control subfield of an HT control field. In an implementation, the third indication information is represented by one subfield. FIG. 10a is a schematic diagram of another frame format of the AAR control subfield according to an embodiment of this application. As shown in FIG. 10a, the AAR control subfield includes but is not limited to: a 16-bit assisted AP link ID bitmap subfield and a 1-bit EMLSR link disable/resume (EMLSR Link Disable/Resume) subfield. When the EMLSR link disable/resume subfield (namely, the third indication information) is set to 1, it indicates that there is an EMLSR link disabled. That is, there is an EMLSR link that enters an unavailable state. In this case, a link corresponding to a bit set to 1 in the assisted AP link ID bitmap (namely, the fourth indication information) is a disabled EMLSR link of the EMLSR non-AP MLD, and a link corresponding to a bit set to 0 is an available link of the EMLSR non-AP MLD. In other words, when the EMLSR link disable/resume subfield is set to 1, it indicates that there is an EMLSR link that enters an unavailable state. In this case, the bit corresponding to the unavailable link in the assisted AP link ID bitmap may be set to 1 for indication. The setting of the bit to 0 is similar. When the EMLSR link disable/resume subfield (namely, the third indication information) is set to 0, it indicates that there is an unavailable link that changes to (or resumes to) an available EMLSR link in the EMLSR non-AP MLD, or indicates that there is an unavailable link that switches back to the listening operation in the EMLSR non-AP MLD. In this case, a link corresponding to a bit set to 1 in the assisted AP link ID bitmap (namely, the fourth indication information) is an EMLSR link that changes from unavailable to available in the EMLSR non-AP MLD, and a link corresponding to a bit set to 0 is an unavailable link of the EMLSR non-AP MLD. In other words, when the EMLSR link disable/resume subfield is set to 0, it indicates that there is a link that resumes from an unavailable state in the EMLSR non-AP MLD. In this case, a bit corresponding to the EMLSR link that resumes being available in the assisted AP link ID bitmap may be set to 1 for indication. The setting of the bit to 0 is similar.

In another implementation, the third indication information is represented by two subfields. FIG. 10b is a schematic diagram of still another frame format of the AAR control subfield according to an embodiment of this application. As shown in FIG. 10b, the AAR control subfield includes but is not limited to: a 16-bit assisted AP link ID bitmap, a 1-bit EMLSR link disable (EMLSR Link Disable) subfield, and a 1-bit EMLSR link resume (EMLSR Link Resume) subfield. When the EMLSR link disable subfield (namely, one piece of indication sub-information in the third indication information) is set to 1, it indicates that there is an EMLSR link disabled. That is, there is an EMLSR link that enters an unavailable state. In this case, a link corresponding to a bit set to 1 in the assisted AP link ID bitmap (namely, the fourth indication information) is a disabled EMLSR link of the EMLSR non-AP MLD, and a link corresponding to a bit set to 0 is an available link of the EMLSR non-AP MLD. When the EMLSR link disable subfield is set to 0, it indicates that the subfield is reserved or there is no EMLSR link disabled. When the EMLSR link resume subfield (namely, another indication sub-information in the third indication information) is set to 1, it indicates that there is an unavailable link that changes to (or resumes to) an available EMLSR link in the EMLSR non-AP MLD, or indicates that there is an unavailable link that switches back to the listening operation in the EMLSR non-AP MLD. In this case, a link corresponding to a bit set to 1 in the assisted AP link ID bitmap (namely, the fourth indication information) is an EMLSR link that changes from unavailable to available in the EMLSR non-AP MLD, and a link corresponding to a bit set to 0 is an unavailable link of the EMLSR non-AP MLD. When the EMLSR link resume subfield is set to 0, it indicates that the subfield is reserved or there is no unavailable link that switches back to the listening operation in the EMLSR non-AP MLD.

It should be understood that names, sequences, and lengths of the subfields shown in FIG. 10a and FIG. 10b are examples. This is not limited in this embodiment of this application.

Optionally, the third indication information and the fourth indication information are located in an aggregated-control (Aggregated-control, A-control) subfield. For example, an A-control subfield variant (variant) may be redesigned to carry the third indication information and the fourth indication information, and an existing A-control subfield that is used to implement another function is not reused. In an implementation, the third indication information is represented by one subfield. FIG. 11a is a schematic diagram of another frame format of the A-control subfield according to an embodiment of this application. As shown in FIG. 11a, the A-control subfield includes but is not limited to: a 16-bit EMLSR link identifier bitmap (EMLSR Link ID Bitmap) and a 1-bit EMLSR link disable/resume (EMLSR Link Disable/Resume) subfield. For a value and a meaning of the EMLSR link ID bitmap, refer to the description of the assisted AP link ID bitmap in FIG. 10a or FIG. 10b. Details are not described herein again. For a value and a meaning of the EMLSR link disable/resume subfield, refer to the related description in FIG. 10a. Details are not described herein again.

In another implementation, the third indication information is represented by two subfields. FIG. 11b is a schematic diagram of still another frame format of the A-control subfield according to an embodiment of this application. As shown in FIG. 11b, the A-control subfield includes but is not limited to: a 16-bit EMLSR link ID bitmap, a 1-bit EMLSR link disable (EMLSR Link Disable) subfield, and a 1-bit EMLSR link resume (EMLSR Link Resume) subfield. For a value and a meaning of the EMLSR link ID bitmap, refer to the description of the assisted AP link ID bitmap in FIG. 10a or FIG. 10b. Details are not described herein again. For values and meanings of the EMLSR link disable subfield and the EMLSR link resume subfield, refer to the related description in FIG. 10b. Details are not described herein again.

It should be understood that names, sequences, and lengths of the subfields shown in FIG. 11a and FIG. 11b are examples. This is not limited in this embodiment of this application.

Optionally, the third indication information and the fourth indication information are located in an EML control field of an EML operating mode notification (operating mode notification, OMN) frame, and an EMLSR mode subfield included in the EML control field is set to 1. That is, the third frame is an EML OMN frame. Because the EML control field is extensible, the EMLSR non-AP MLD may further use the third frame to carry some related information, for example, start time and end time of an unavailable state, and another specific capability of an EMLSR STA in an available state. In other words, the EML control field may further include one or more of the following information: disabling start time, availability start time, disabling end time, disabling duration, and transmit and receive capabilities of an available link of the EMLSR non-AP MLD.

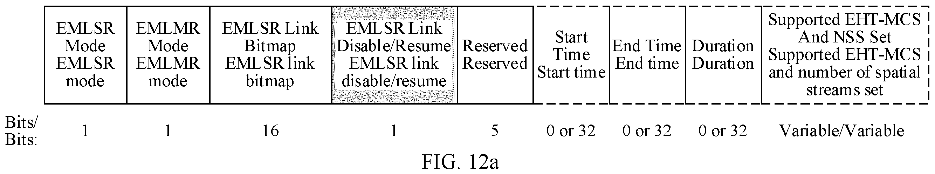

In an implementation, the third indication information is represented by one subfield. FIG. 12a is a schematic diagram of another frame format of the EML control field according to an embodiment of this application. As shown in FIG. 12a, the EML control field includes but is not limited to: a 1-bit EMLSR mode (EMLSR mode) subfield, a 16-bit EMLSR link bitmap (EMLSR Link Bitmap), and a 1-bit EMLSR link disable/resume (EMLSR Link Disable/Resume) subfield. The EMLSR mode subfield is set to 1. For a value and a meaning of the EMLSR link disable/resume subfield, refer to the related description in FIG. 10a. Details are not described herein again. For a value and a meaning of the EMLSR link bitmap, refer to the description of the assisted AP link ID bitmap in FIG. 10a or FIG. 10b. Details are not described herein again. Optionally, when the EMLSR link disable/resume subfield is set to 1 to indicate that there is an EMLSR link that enters an unavailable state, the EML control field shown in FIG. 12a may further include one or more of the following subfields: a start time subfield, an end time (end time) subfield, a duration (duration) subfield, and a supported EHT-MCS and NSS set subfield. In this case, the start time subfield indicates disabling start time, the end time subfield indicates disabling end time, the duration subfield indicates disabling duration, and the supported EHT-MCS and NSS set subfield indicates specific transmit and receive capabilities of a currently available link. A design of the supported EHT-MCS and NSS set subfield may be based on Section 9.4.2.313.1 in 802.11be D1.4, and details are not described herein. When the EMLSR link disable/resume subfield is set to 0 to indicate that there is an unavailable link that changes to (or resumes to) an available EMLSR link in the EMLSR non-AP MLD, the EML control field shown in FIG. 12a may further include a start time subfield that indicates availability start time, that is, time at which the unavailable link resumes to the available EMLSR link.

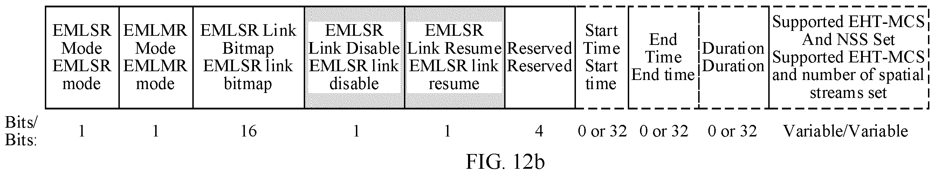

In another implementation, the third indication information is represented by two subfields. FIG. 12b is a schematic diagram of still another frame format of the EML control field according to an embodiment of this application. As shown in FIG. 12b, the EML control field includes but is not limited to: a 1-bit EMLSR mode (EMLSR mode) subfield, a 16-bit EMLSR link bitmap (EMLSR Link Bitmap), a 1-bit EMLSR link disable subfield, and a 1-bit EMLSR link resume subfield. Optionally, the EML control field may further include one or more of a start time subfield, an end time (end time) subfield, a duration (duration) subfield, and a supported EHT-MCS and NSS set subfield. The EMLSR mode subfield is set to 1. For values and meanings of the EMLSR link disable subfield and the EMLSR link resume subfield, refer to the related description in FIG. 10b. Details are not described herein again. For a value and a meaning of the EMLSR link bitmap, refer to the description of the assisted AP link ID bitmap in FIG. 10a or FIG. 10b. Details are not described herein again. For the start time subfield, the end time (end time) subfield, the duration (duration) subfield, and the supported EHT-MCS and NSS set subfield, refer to the corresponding description in FIG. 12a. Details are not described herein again.

It should be understood that names, sequences, and lengths of the subfields shown in FIG. 12a and FIG. 12b are examples. This is not limited in this embodiment of this application.

The foregoing content describes in detail the procedure of the transmit end in this embodiment of this application. In some other embodiments of this application, corresponding to the procedure (step S201 and step S202) of the transmit end, the link state indication method of the receive end in the EMLSR mode includes but is not limited to the following steps.

S203: The AP MLD receives the third frame. The third frame includes the fourth indication information. Optionally, the third frame further includes the third indication information. The third indication information indicates that a state of a link of the non-AP MLD changes. The fourth indication information indicates an available link or a link whose state changes in the EMLSR non-AP MLD. Specifically, for implementations of the third indication information and the fourth indication information, refer to the foregoing description. Details are not described herein again.

S204: The AP MLD determines an available link of the EMLSR non-AP MLD based on the fourth indication information in the third frame.

Optionally, after receiving the third frame, the AP MLD associated with the EMLSR non-AP MLD determines an available link of the EMLSR non-AP MLD based on the third indication information and the fourth indication information carried in the third frame. When an AP (or an AP MLD) end receives a notification indicating that the EMLSR non-AP MLD (or some links thereof) enters an unavailable state, the AP end does not send an initial control frame to the EMLSR non-AP MLD on an unavailable link until the AP end receives a notification indicating that the unavailable link resumes being available.

After the EMLSR non-AP MLD sends a notification indicating that the unavailable link resumes being available, an EMLSR STA on the link that resumes being available may immediately switch to the listening mode, or switch to the listening mode after a specified time T (for example, a short inter-frame space (short interframe space, SIFS)). If the link that resumes being available in the EMLSR non-AP MLD is a receive limitation link, the AP (or the AP MLD) that receives the notification should wait for at least one transition delay (transition delay) (specific waiting duration may be a transition delay+specified time T) before sending an initial control frame to an EMLSR STA that resumes being available. If the link that resumes being available in the EMLSR non-AP MLD is a receive full capability link, the AP (or the AP MLD) that receives the notification may directly send, without waiting, an initial control frame to the EMLSR STA that resumes being available, or send, after the specified time T, an initial control frame to the EMLSR STA that resumes being available.

Optionally, when antenna capability configurations of the EMLSR non-AP MLD are asymmetric, when a receive full capability link of the EMLSR non-AP MLD is available, the AP MLD may send an MU-RTS frame or a BSRP frame to the EMLSR non-AP MLD on the receive full capability link, and use the MU-RTS frame or the BSRP frame to carry indication information indicating whether the MU-RTS frame or the BSRP frame is an initial control frame, or indicating whether the MU-RTS frame or the BSRP frame received by a station is an initial control frame. Specifically, for a possible implementation of the indication information, refer to the following description in Embodiment 4 and Embodiment 5. Details are not described herein.

In this embodiment of this application, when the EMLSR non-AP MLD or an EMLSR STA on a link of the EMLSR non-AP MLD is temporarily unavailable due to some reasons, the EMLSR non-AP MLD actively reports the state change of the link of the EMLSR non-AP MLD, and reports the changed link, so that the AP MLD learns, in a timely manner, the state change of the link of the EMLSR non-AP MLD associated with the AP MLD and the changed link. Therefore, the AP MLD does not send an initial control frame to the EMLSR non-AP MLD on an unavailable link of the EMLSR non-AP MLD, to reduce a waste of resources.

### Embodiment 3

This embodiment of this application mainly describes: When an EMLSR non-AP MLD or an EMLSR STA on a link of the EMLSR non-AP MLD is temporarily unavailable due to some reasons, or the EMLSR STA ends unavailability and is ready to resume to a listening mode (listening mode), an AP MLD associated with the EMLSR non-AP MLD is implicitly notified of a state change of the link of the EMLSR non-AP MLD.

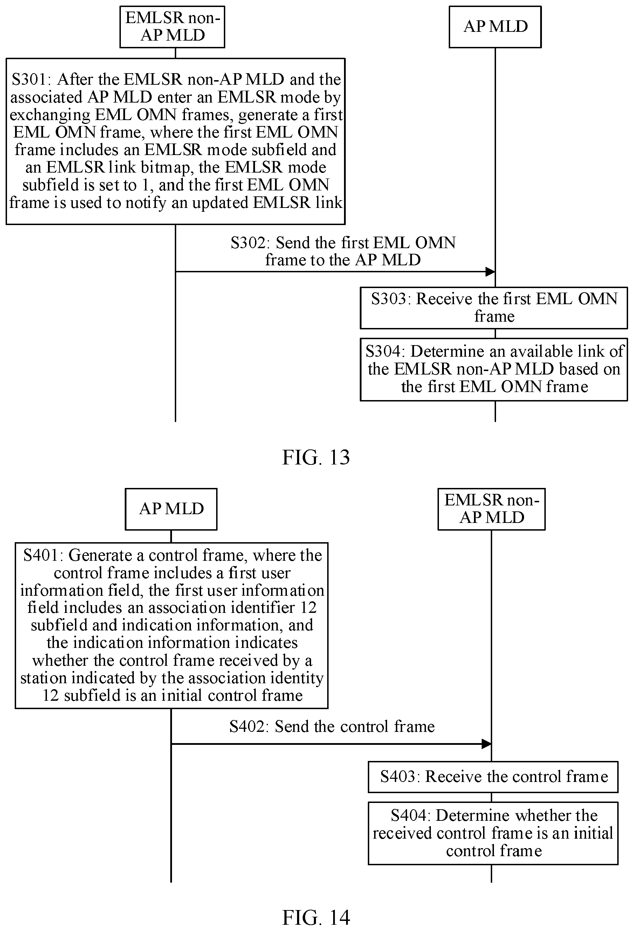

FIG. 13 is a third schematic flowchart of a link state indication method in an EMLSR mode according to an embodiment of this application. In this embodiment of this application, antenna capability configurations of the EMLSR non-AP MLD may be symmetric or asymmetric. This is not limited in this embodiment of this application. As shown in FIG. 13, the link state indication method in the EMLSR mode includes but is not limited to the following steps.

S301: After the EMLSR non-AP MLD and the associated AP MLD enter the EMLSR mode by exchanging EML OMN frames, the EMLSR non-AP MLD generates a first EML OMN frame, where the first EML OMN frame includes an EMLSR mode subfield and an EMLSR link bitmap, the EMLSR mode subfield is set to 1, and the first EML OMN frame is used to notify an updated EMLSR link.

S302: The EMLSR non-AP MLD sends the first EML OMN frame to the AP MLD.

Optionally, after the EMLSR non-AP MLD and the associated AP MLD enter the EMLSR mode by exchanging EML OMN frames (in this case, EMLSR mode subfields in the two exchanged EML OMN frames are both set to 1), the EMLSR non-AP MLD may generate another EML OMN frame (for ease of differentiation, the generated EML OMN frame is referred to as the first EML OMN frame). The EMLSR non-AP MLD may send the first EML OMN frame to the AP MLD on any available link. The first EML OMN frame is used to notify the updated EMLSR link. For a frame format of the first EML OMN frame, refer to the description of the EML OMN frame in the existing standard. Details are not described herein. In other words, in this embodiment of this application, a function of an EML OMN frame is added, and a frame format of the EML OMN frame is not changed. The first EML OMN frame includes the EMLSR mode subfield and the EMLSR link bitmap (EMLSR Link Bitmap), and the EMLSR mode subfield is set to 1. The EMLSR link bitmap indicates a subset of available links used by the non-AP MLD in the EMLSR mode (The EMLSR Link Bitmap subfield indicates the subset of the enabled links that is used by the non-AP MLD in the EMLSR mode). For details, refer to the description in the existing standard. A link corresponding to a bit with a value 1 in the EMLSR link ID bitmap is used by the non-AP MLD for the EMLSR mode, and changes to a member of EMLSR links or switches back to the listening mode. In other words, a link corresponding to a bit with a value 1 in the EMLSR link bitmap is a currently available link.

Optionally, an EML control field of the first EML OMN frame may further include one or more of the following information: start time of an EMLSR link update, and transmit and receive capabilities of an available link of the EMLSR non-AP MLD. For example, a start time (start time) subfield may be newly added to the EML control field to indicate start time of an EMLSR link update, and a supported EHT-MCS and NSS set subfield may be added to indicate specific transmit and receive capabilities of a currently available link. A design of the supported EHT-MCS and NSS set subfield may be based on Section 9.4.2.313.1 in 802.11be D1.4, and details are not described herein.

S303: The AP MLD receives the first EML OMN frame.

S304: The AP MLD determines an available link of the EMLSR non-AP MLD based on the first EML OMN frame.

Optionally, after the EMLSR non-AP MLD and the associated AP MLD enter the EMLSR mode by exchanging EML OMN frames (in this case, EMLSR mode subfields in the two exchanged EML OMN frames are both set to 1), the AP MLD receives a new EML OMN frame (namely, the first EML OMN frame) sent by the EMLSR non-AP MLD, and the EMLSR mode subfield is still 1. It indicates that the EMLSR non-AP MLD is not ready to exit the EMLSR mode at this time. Therefore, the AP MLD may understand the new EML OMN frame (namely, the first EML OMN frame) whose EMLSR mode subfield is 1 as a notification of a state change of an EMLSR link. The AP MLD may then determine, based on the indication of the EMLSR link bitmap in the first EML OMN frame, an available link of the EMLSR non-AP MLD, that is, a link corresponding to a bit whose value is 1 in the EMLSR link bitmap.

In this embodiment of this application, a new field (or subfield) does not need to be added to indicate a state change of a link of the EMLSR non-AP MLD, but a function and a specific rule of an EML OMN frame are added to notify the state change of the link. In this way, the AP MLD can learn of, in a timely manner, a currently available link of the EMLSR non-AP MLD associated with the AP MLD, and the AP MLD does not send an initial control frame on an unavailable link of the EMLSR non-AP MLD, to reduce a waste of resources.

There may be links with asymmetric antenna capability configurations in the EMLSR non-AP MLD. That is, each link has one antenna, an antenna has a stronger receive capability and can receive all types of PPDUs, and another antenna has a weaker receive capability and can receive only some types of PPDUs. Therefore, an AP may normally communicate with an EMLSR STA with a stronger antenna receive capability, and does not need to use an antenna on another link. In this way, the AP may not need to send an initial control frame before sending downlink data to the EMLSR STA with the stronger antenna receive capability. Therefore, when the EMLSR STA receives a MU-RTS frame or a BSRP frame, the EMLSR STA cannot determine whether the received frame is an initial control frame. That is, the EMLSR non-AP MLD cannot determine whether an antenna/spatial stream on another link needs to be temporarily switched to a link on which the EMLSR STA operates. It may be understood that, although the AP may normally communicate with the EMLSR STA with the stronger antenna receive capability without using an antenna on another link, the EMLSR STA may need to use multi-spatial stream transmission. Therefore, even if the EMLSR STA has a stronger receive capability, there is only one antenna on a link on which the EMLSR STA operates, and multi-spatial stream cannot be implemented. Therefore, an antenna/spatial stream on another link may still need to be temporarily switched to a link on which the EMLSR STA operates.

To resolve a problem that when antenna capability configurations of the EMLSR non-AP MLD are asymmetric, a STA on a receive full capability link cannot determine whether a received MU-RTS frame or BSRP frame is an initial control frame, this application further provides a frame type indication method in the EMLSR mode, to indicate, by adding indication information to the MU-RTS frame or the BSRP frame, whether the MU-RTS frame or the BSRP frame is an initial control frame. In this way, the EMLSR STA on the receive full capability link can determine whether the received MU-RTS frame or BSRP frame is an initial control frame, to determine a behavior of the EMLSR STA after receiving the MU-RTS frame or the BSRP frame.

The following describes in detail a frame type indication method in the EMLSR mode provided in this application.

### Embodiment 4

This embodiment of this application mainly describes how a STA on a receive full capability link determines whether a received MU-RTS frame or BSRP frame is an initial control frame when antenna capability configurations of an EMLSR non-AP MLD are asymmetric.

Optionally, Embodiment 4 of this application may be implemented together with any one of Embodiment 1 to Embodiment 3, or may be implemented separately. This is not limited in this application.

FIG. 14 is a schematic flowchart of a frame type indication method in an EMLSR mode according to an embodiment of this application. In this embodiment of this application, antenna capability configurations of the EMLSR non-AP MLD are asymmetric. That is, each link of the EMLSR non-AP MLD has one antenna, one antenna is a common antenna, and the other antennas are limited antennas. A link on which a common antenna is located is referred to as a receive full capability link (RX full capability link), and a link on which a limited antenna is located is referred to as a receive limitation link (RX limitation link). As shown in FIG. 14, the frame type indication method in the EMLSR mode includes but is not limited to the following steps.

S401: An AP MLD generates a control frame, where the control frame includes a first user information field, the first user information field includes an association identifier 12 subfield and indication information, and the indication information indicates whether the control frame received by a station indicated by the association identifier 12 subfield is an initial control frame.

S402: The AP MLD sends the control frame.

S403: An EMLSR non-AP MLD receives the control frame.

S404: The EMLSR non-AP MLD determines whether the received control frame is an initial control frame.

The control frame is an MU-RTS frame or a BSRP frame.

There are a plurality of links between the EMLSR non-AP MLD and the AP MLD, and the plurality of links include at least one receive full capability link and at least one receive limitation link.

Optionally, the AP MLD may generate and send an MU-RTS frame or a BSRP frame. Correspondingly, the EMLSR non-AP MLD receives the control frame. The MU-RTS frame or the BSRP frame includes one or more user information fields. In an implementation, indication information is carried in each user information field. In another implementation, indication information is carried only in a user information field corresponding to an EMLSR station. The first user information field (which is each user information field, or a user information field corresponding to an EMLSR station) includes the association identifier (association identifier, AID) 12 subfield and the indication information. The AID 12 subfield indicates a station. The indication information may indicate whether the control frame (namely, the MU-RTS frame or the BSRP frame) received by the station indicated by the AID 12 subfield is an initial control frame. The EMLSR station is a station that enters the EMLSR mode in the EMLSR non-AP MLD.

Optionally, a length of the indication information may be 1 bit. When the indication information is set to a first value, it indicates that the control frame (namely, the MU-RTS frame or the BSRP frame) received by the station indicated by the AID 12 subfield is an initial control frame. When the indication information is set to a second value, it indicates that the control frame (namely, the MU-RTS frame or the BSRP frame) received by the station indicated by the AID 12 subfield is not an initial control frame. The first value is 1, and the second value is 0; or the first value is 0, and the second value is 1. This is not limited in this embodiment of this application.

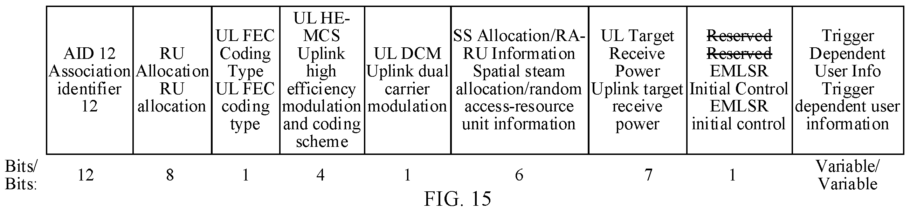

For example, the indication information may be represented by one reserved bit in a user information (user info) field. For ease of description, the indication information may be referred to as an EMLSR initial control (EMLSR Initial Control) subfield. FIG. 15 is a schematic diagram of a frame format of a user information field in an MU-RTS frame or a BSRP frame according to an embodiment of this application. As shown in FIG. 15, the user information field in the MU-RTS frame or the BSRP frame includes but is not limited to an AID 12 subfield and a 1-bit EMLSR initial control subfield.

When the EMLSR initial control subfield is set to 0, it indicates that a current MU-RTS frame or BSRP frame is a common control frame for a STA indicated by the AID 12 subfield, or the MU-RTS frame or the BSRP frame received by the station indicated by the AID 12 subfield is not an initial control frame. It should be understood that, if the STA that receives the current MU-RTS frame or BSRP frame and whose AID is the same as the AID 12 subfield is an EMLSR STA (the EMLSR STA herein is a STA on a receive full capability link), the EMLSR STA does not need to enter the EMLSR mode. That is, the EMLSR non-AP MLD does not need to switch an antenna/spatial stream on another (specified) link to a link for receiving an initial control frame, and needs to reply with a corresponding response frame.

When the EMLSR initial control subfield is set to 1, it indicates that the current MU-RTS frame or BSRP frame is an initial control frame for the STA indicated by the AID 12 subfield, or the MU-RTS frame or the BSRP frame received by the station indicated by the AID 12 subfield is an initial control frame. Therefore, the EMLSR STA that receives the MU-RTS frame or the BSRP frame and whose AID is the same as the AID 12 subfield needs to enter the EMLSR mode. That is, the EMLSR non-AP MLD switches an antenna/spatial stream on another (specified) link to a link for receiving the initial control frame, to prepare for data receiving and sending.

It should be understood that names, sequences, and lengths of the subfields shown in FIG. 15 are examples. This is not limited in this embodiment of this application.

It should be further understood that, in this embodiment of this application, the indication information (namely the EMLSR initial control subfield) is placed in the user information field of the MU-RTS frame or the BSRP frame. Therefore, the MU-RTS frame or the BSRP frame may simultaneously trigger (trigger) a plurality of EMLSR STAs and non-EMLSR STAs. Therefore, if the STA corresponding to the AID 12 subfield is an EMLSR STA, a reserved bit in the user info field may be changed to an EMLSR initial control subfield. If the STA corresponding to the AID 12 subfield is a non-EMLSR STA, a reserved bit in the user info field of the AID 12 subfield may also be changed to an EMLSR initial control subfield, and a value of the EMLSR initial control subfield is set to 0 to indicate that the current MU-RTS frame or BSRP frame is a common control frame (corresponding to an implementation in which each user information field carries indication information). Alternatively, if the STA corresponding to the AID 12 subfield is an EMLSR STA, a reserved bit in the user info field of the AID 12 subfield may be changed to an EMLSR initial control subfield. If the STA corresponding to the AID 12 subfield is a non-EMLSR STA, a reserved bit in the user info subfield may not be changed (corresponding to an implementation in which a user information field corresponding to the EMLSR station carries indication information).

Optionally, in this embodiment of this application, the AP MLD may be allowed to send, only on the receive full capability link, the MU-RTS frame or the BSRP frame carrying the indication information (or the EMLSR Initial Control subfield). Certainly, in this embodiment of this application, the AP MLD may also be allowed to send, on both the receive full capability link and the receive limitation link, the MU-RTS frame or the BSRP frame carrying the indication information (or the EMLSR Initial Control subfield), but the indication information in the MU-RTS frame or the BSRP frame sent on the receive limitation link is set to the first value, to indicate that the MU-RTS frame or the BSRP frame received by a station on the receive limitation link is an initial control frame. This is because the station on the receive limitation link can receive only an initial control frame.

Optionally, after receiving the MU-RTS frame or the BSRP frame, the EMLSR non-AP MLD determines, based on the indication information carried in the user information field, whether the MU-RTS frame or the BSRP frame received by the EMLSR non-AP MLD is an initial control frame. If the EMLSR non-AP MLD determines that the MU-RTS frame or the BSRP frame received by the EMLSR non-AP MLD is an initial control frame, the EMLSR non-AP MLD may switch an antenna/spatial stream on another (specified) link to a link for receiving the initial control frame, to prepare for data receiving and sending. If the EMLSR non-AP MLD determines that the MU-RTS frame or the BSRP frame received by the EMLSR non-AP MLD is not an initial control frame, the EMLSR non-AP MLD may reply with a response frame of the MU-RTS frame or the BSRP frame.

In this embodiment of this application, when antenna capability configurations of the EMLSR non-AP MLD are asymmetric, the indication information is carried in the user information field of the MU-RTS frame or the BSRP frame, to indicate whether the MU-RTS frame or BSRP frame received by a station is an initial control frame. In this way, the EMLSR STA on the receive full capability link of the EMLSR non-AP MLD can determine whether the received MU-RTS frame or BSRP frame is an initial control frame, to determine a subsequent behavior of the EMLSR STA. In addition, the indication information is carried in the user information field, so that different information may be indicated for different stations. This implementation is more flexible. For example, the indication information is carried in the user information field, so that a same MU-RTS frame or BSRP frame is an initial control frame for some EMLSR STAs, and is a common control frame for the other EMLSR STAs.

### Embodiment 5

This embodiment of this application mainly describes: When antenna capability configurations of an EMLSR non-AP MLD are asymmetric, indication information is carried in a common information field of an MU-RTS frame or a BSRP frame, so that a STA on a receive full capability link determines whether a received MU-RTS frame or BSRP frame is an initial control frame.

Optionally, Embodiment 5 of this application may be implemented together with any one of Embodiment 1 to Embodiment 3, or may be implemented separately. This is not limited in this application.

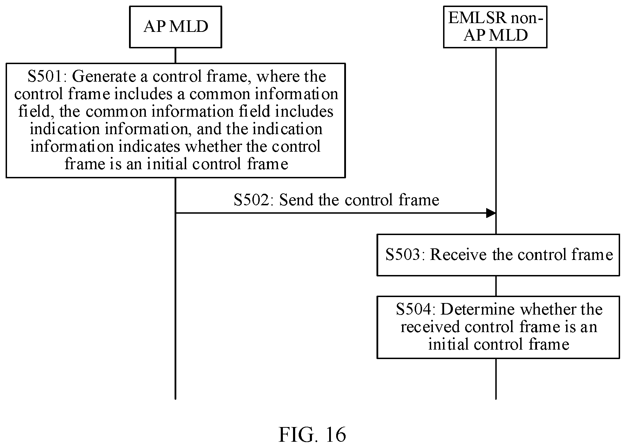

FIG. 16 is another schematic flowchart of a frame type indication method in an EMLSR mode according to an embodiment of this application. In this embodiment of this application, antenna capability configurations of the EMLSR non-AP MLD are asymmetric. That is, each link of the EMLSR non-AP MLD has one antenna, one antenna is a common antenna, and the other antennas are limited antennas. A link on which a common antenna is located is referred to as a receive full capability link (RX full capability link), and a link on which a limited antenna is located is referred to as a receive limitation link (RX limitation link). As shown in FIG. 16, the frame type indication method in the EMLSR mode includes but is not limited to the following steps.

S501: An AP MLD generates a control frame, where the control frame includes a common information field, the common information field includes indication information, and the indication information indicates whether the control frame is an initial control frame.

S502: The AP MLD sends the control frame.

S503: An EMLSR non-AP MLD receives the control frame.

S504: The EMLSR non-AP MLD determines whether the received control frame is an initial control frame.

The control frame is an MU-RTS frame or a BSRP frame.

There are a plurality of links between the EMLSR non-AP MLD and the AP MLD, and the plurality of links include at least one receive full capability link and at least one receive limitation link.

Optionally, the AP MLD may generate and send an MU-RTS frame or a BSRP frame. The MU-RTS frame or the BSRP frame may include a common information field, and the common information field includes indication information indicating whether the MU-RTS frame or the BSRP frame is an initial control frame. Correspondingly, the EMLSR non-AP MLD receives the MU-RTS frame or the BSRP frame, and determines, based on the indication of the common information field, whether the MU-RTS frame or the BSRP frame received by the EMLSR non-AP MLD is an initial control frame. If the EMLSR non-AP MLD determines that the MU-RTS frame or the BSRP frame received by the EMLSR non-AP MLD is an initial control frame, the EMLSR non-AP MLD may switch an antenna/spatial stream on another (specified) link to a link for receiving the initial control frame, to prepare for data receiving and sending. If the EMLSR non-AP MLD determines that the MU-RTS frame or the BSRP frame received by the EMLSR non-AP MLD is not an initial control frame, the EMLSR non-AP MLD may reply with a response frame of the MU-RTS frame or the BSRP frame.

Optionally, a length of the indication information may be 1 bit. When the indication information is set to a first value, it indicates that the control frame (namely, the MU-RTS frame or the BSRP frame) is an initial control frame. When the indication information is set to a second value, it indicates that the control frame (namely, the MU-RTS frame or the BSRP frame) is not an initial control frame. The first value is 1, and the second value is 0; or the first value is 0, and the second value is 1. This is not limited in this embodiment of this application.

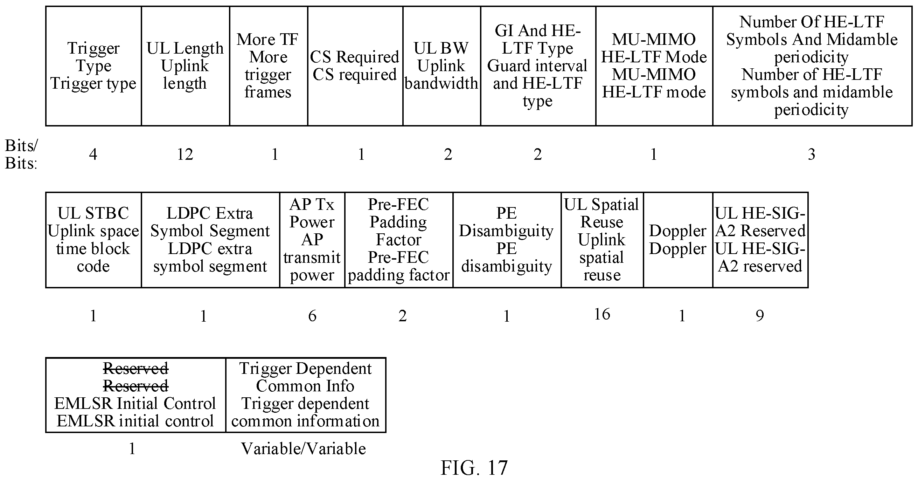

For example, the indication information may be represented by one reserved bit in a common information (Common Info) field. For ease of description, the indication information may be referred to as an EMLSR initial control (EMLSR Initial Control) subfield. FIG. 17 is a schematic diagram of a frame format of the common information field in the MU-RTS frame or the BSRP frame according to an embodiment of this application. As shown in FIG. 17, the common information field in the MU-RTS frame or the BSRP frame includes but is not limited to a 1-bit EMLSR initial control subfield. When the EMLSR initial control subfield is set to 0, it indicates that a current MU-RTS frame or BSRP frame is a common control frame, and an EMLSR STA that receives the MU-RTS frame or the BSRP frame does not need to enter the EMLSR mode, and only needs to reply with a corresponding response frame. When the EMLSR initial control subfield is set to 1, it indicates that a current MU-RTS frame or BSRP frame is an initial control frame, and an EMLSR STA that receives the MU-RTS frame or the BSRP frame needs to enter the EMLSR mode. That is, the EMLSR non-AP MLD switches an antenna/spatial stream on another (specified) link to a link for receiving the initial control frame, to prepare for data receiving and sending.

It should be understood that names, sequences, and lengths of the subfields shown in FIG. 17 are examples. This is not limited in this embodiment of this application.

It should be further understood that, in this embodiment of this application, the indication information (namely, the EMLSR initial control subfield) is placed in the common info field of the MU-RTS frame or the BSRP frame. Therefore, each STA that receives the MU-RTS frame or the BSRP frame can read the indication information (namely, the EMLSR initial control subfield). Therefore, the indication information (namely, the EMLSR initial control subfield) indicates whether the MU-RTS frame or the BSRP frame currently received by each STA is an initial control frame. If the STA that receives the MU-RTS frame or the BSRP frame is a non-EMLSR STA, the EMLSR initial control subfield may be ignored. If the STA that receives the MU-RTS frame or the BSRP frame is an EMLSR STA, a corresponding response is made based on a value of the EMLSR initial control subfield.

In this embodiment of this application, the indication information is carried in the common information field of the MU-RTS frame or the BSRP frame, to indicate whether the MU-RTS frame or the BSRP frame is an initial control frame. A problem that a STA on a receive full capability link cannot determine whether a received MU-RTS frame or BSRP frame is an initial control frame in the EMLSR mode with asymmetric antenna configurations can be resolved, so that the EMLSR non-AP MLD can determine a behavior of the EMLSR non-AP MLD after receiving the MU-RTS frame or the BSRP frame.

In addition, in some cases, two links of the non-AP MLD may not be capable of simultaneous transmit and receive. That is, when a STA on a link is performing transmission, a STA on another link cannot meet an EHT receive requirement. Therefore, a non-simultaneous transmit and receive (Non-simultaneous Transmit and Receive, NSTR) capability is introduced. A possible cause of this case is that a spectrum space between two links is too short, and consequently, when a STA on one link performs transmission, reception interference of a STA on the other link is excessively large. Therefore, if two links of the non-AP MLD have the NSTR capability, both the non-AP MLD and the AP MLD associated with the non-AP MLD need to ensure that transmission time of a STA on one link does not overlap receive time of a STA on the other link. However, for the AP MLD associated with the non-AP MLD, STAs on some links with the NSTR capability of the non-AP MLD may be unavailable due to some reasons (including but not limited to point-to-point transmission (P2P), that is, the STA communicates, on the link, with a device other than the AP MLD associated with the STA). Therefore, when STAs on some links with the NSTR capability of the non-AP MLD are unavailable due to some reasons, if the associated AP MLD still initiates transmission to the STA, normal communication is affected.

The link state indication method provided in this embodiment of this application may also resolve the foregoing problem. For details, refer to Embodiment 6.

### Embodiment 6

This embodiment of this application mainly describes how a non-AP MLD notifies an AP MLD associated with the non-AP MLD if a link pair (link pair) of the non-AP MLD has an NSTR capability, that is, an NSTR link pair, and a STA on the NSTR link pair is temporarily unavailable due to some reasons or ends unavailability.

The NSTR link pair means that for two links of an MLD, if a STA on one link of the MLD is performing transmission, and a STA on the other link of the MLD cannot meet an EHT receive requirement, the two links form an NSTR link pair.

For example, a STA (STA 1) on an NSTR link pair of the non-AP MLD may establish a P2P connection to a STA of another non-AP MLD or a non-AP STA (STA 3), for example, tunneled direct link setup (Tunneled Directlink Setup, TDLS). In this case, if the STA 1 initiates transmission to the STA 3, the AP MLD associated with the non-AP MLD does not know this transmission. Therefore, when the STA 1 performs P2P transmission to the STA 3, the associated AP MLD may simultaneously initiate transmission to another STA (STA 2) on the NSTR link pair. In this case, due to an NSTR feature, the STA2 cannot normally receive data sent by the AP MLD. In other words, when a STA on an NSTR link pairs of the non-AP MLD performs transmission to a device other than the associated AP MLD, all STAs on the NSTR link pair of the non-AP MLD cannot normally receive transmitted data from the associated AP MLD. That is, all STAs on the NSTR link pair are unavailable. However, according to the existing standards and technologies, the AP MLD does not know whether unavailability occurs on the NSTR link pair of the non-AP MLD currently associated with the AP MLD. In this case, if the AP MLD still transmits data to the STA on the NSTR link pair of the non-AP MLD when unavailability occurs, the STA cannot correctly perform receiving or reply to the AP MLD. If the AP MLD does not receive a correct response, the AP MLD may repeatedly send a corresponding frame. This causes a waste of resources.

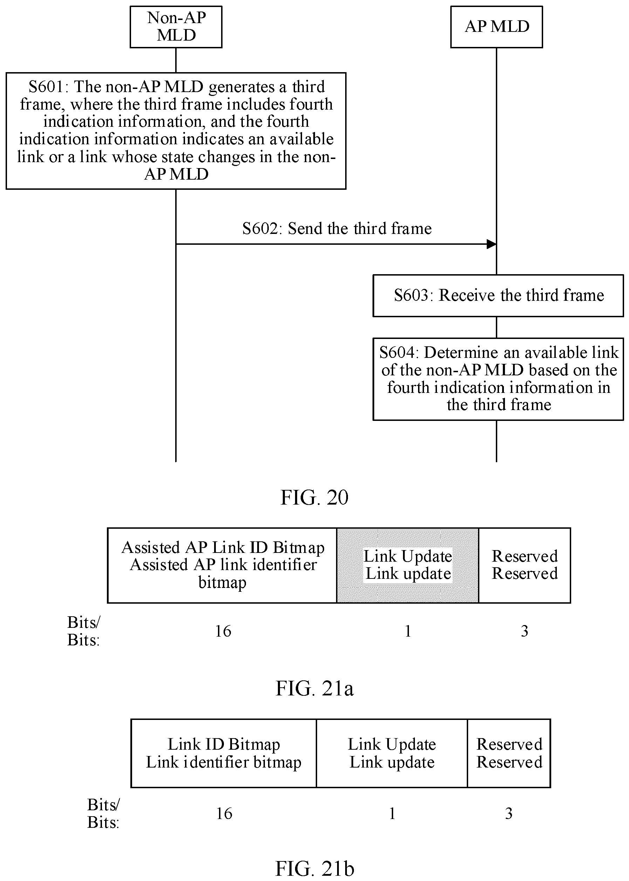

FIG. 20 shows a link state indication method provided in this application. Specifically, a link (link for short below) state indication method in an NSTR link pair includes but is not limited to the following steps.

S601: The non-AP MLD generates a third frame, where the third frame includes fourth indication information, and the fourth indication information indicates an available link or a link whose state changes in the non-AP MLD.

S602: The non-AP MLD sends the third frame.

Optionally, when the non-AP MLD finds that states of all or some links of the non-AP MLD change, for example, for an AP MLD associated with the non-AP MLD, (a station on) at least one link of the non-AP MLD is unavailable or resumes from unavailable to available, the non-AP MLD may generate the third frame. The third frame may carry the fourth indication information, and the fourth indication information may indicate an available link or a link whose state changes in the non-AP MLD. Optionally, the third frame may further carry third indication information, and the third indication information may indicate whether a state of a link of the non-AP MLD changes.

The non-AP MLD may send the third frame on any available link. Optionally, the state of the link of the non-AP MLD changes only after the non-AP MLD sends the third frame or after a period of time after the non-AP MLD sends the third frame. Alternatively, the state of the link of the non-AP MLD may change before the non-AP MLD sends the third frame or before a period of time before the non-AP MLD sends the third frame.

Optionally, the state change of the link of the non-AP MLD includes but is not limited to: a link is disabled, and an unavailable NSTR link of the non-AP MLD changes to an available link.

To better understand the indication manners of the third indication information and the fourth indication information, the following describes possible implementations of the third indication information and the fourth indication information by using examples.

### Implementation 1

The third indication information may indicate that a state of a link of the non-AP MLD changes, and the fourth indication information may indicate an available link of the non-AP MLD. For example, the fourth indication information may indicate an available link of the non-AP MLD by using a bitmap. That is, one bit in the bitmap corresponds to one link. When a bit in the bitmap is set to 1, it indicates that a link corresponding to the bit is an available link. Alternatively, the fourth indication information may indicate an available link of the non-AP MLD by using a link identifier (link ID). That is, a link identified by the link identifier is an available link. This is not limited in this embodiment of this application.

Optionally, the third indication information and the fourth indication information can be located in an AP assistance request (AP assistance request, AAR) control subfield of an HT control field. For example, a reserved bit in the AAR control subfield may indicate whether a state of a link of the non-AP MLD changes. For ease of description, the reserved bit may be referred to as a link update (Link Update) subfield. An assisted AP link identifier bitmap (Assisted AP Link ID Bitmap) in the AAR control subfield may be reused to indicate a specific available link of the non-AP MLD.

FIG. 21a is a schematic diagram of a frame format of the AAR control subfield according to an embodiment of this application. As shown in FIG. 21a, the AAR control subfield includes but is not limited to the following: an assisted AP link identifier bitmap (Assisted AP Link ID Bitmap) and a link update (Link Update) subfield. The assisted AP link identifier bitmap may be 16 bits, and the link update subfield may be 1 bit. When the link update subfield is set to 1 (namely, the third indication information), it indicates that a state of a link of a non-AP MLD changes. That is, a link may be unavailable or resume being available. If the link update subfield is set to 0, it indicates that a state of a link does not change. It should be understood that, whether the link update subfield is set to 0 to indicate that a state of a link changes, or is set to 1 to indicate that a state of a link changes is not limited in this embodiment of this application. When the link update subfield is set to 1, a link corresponding to a bit that is set to 1 in the assisted AP link ID bitmap (namely, the fourth indication information) is an available link of the non-AP MLD. It should be understood that, if all bits in the assisted AP link ID bitmap are 0, it indicates that all links of the non-AP MLD are unavailable, or there is no available link. That is, a quantity of available links of the non-AP MLD is 0, or the entire non-AP MLD is unavailable.

In this embodiment of this application, an indication (namely, the link update subfield) indicating that a state of a link of the non-AP MLD changes is added to the AAR control subfield, and the assisted AP link ID bitmap is reused, but a meaning of the assisted AP link ID bitmap is modified to indicate an available link of the non-AP MLD. No new frame format or procedure needs to be designed, to reduce signaling overheads.

Optionally, the third indication information and the fourth indication information can be located in an aggregated-control (Aggregated-control, A-control) subfield. For example, an A-control subfield variant (variant) may be redesigned to carry the third indication information and the fourth indication information.

FIG. 21b is a schematic diagram of a frame format of the A-control subfield according to an embodiment of this application. As shown in FIG. 9b, the A-control subfield includes but is not limited to a link identifier bitmap (Link ID Bitmap) and a link update (Link Update) subfield. The link identifier bitmap may be 16 bits, and the link update subfield may be 1 bit. For a value and a meaning of the link update subfield, refer to the description in FIG. 9a. Details are not described herein again. When the link update subfield is set to 1, a link corresponding to a bit that is set to 1 in the link ID bitmap (namely, the fourth indication information) is an available link of the non-AP MLD. It should be understood that, if all bits in the link ID bitmap are 0, it indicates that there is no available link in the non-AP MLD. That is, a quantity of available links of the non-AP MLD is 0, or the entire non-AP MLD is unavailable. It should be further understood that whether a bit with a value 0 in the link ID bitmap represents an available link or a bit with a value 1 represents an available link is not limited in this embodiment of this application.

In this embodiment of this application, the new A-control subfield is designed to carry the third indication information and the fourth indication information. Meanings of the A-control subfield are clear, and a conventional station does not misread the A-control subfield (because the conventional station does not understand the newly designed A-control subfield).

The foregoing content describes in detail the procedure of the transmit end in this embodiment of this application. In some other embodiments of this application, corresponding to the procedure (step S601 and step S602) of the transmit end, the link state indication method of the receive end includes but is not limited to the following steps.

S603: The AP MLD receives the third frame. The third frame includes the fourth indication information, and the fourth indication information indicates an available link or a link whose state changes in the non-AP MLD. Optionally, if the third frame further includes third indication information, the third indication information indicates whether a state of a link of the non-AP MLD changes. Specifically, for implementations of the third indication information and the fourth indication information, refer to the foregoing descriptions. Details are not described herein again.

S604: The AP MLD determines an available link of the non-AP MLD based on the fourth indication information in the third frame.

Optionally, after receiving the third frame, the AP MLD associated with the non-AP MLD determines an available link of the non-AP MLD based on the third indication information and the fourth indication information carried in the third frame. Specifically, the AP MLD may first obtain, based on the third indication information, whether a state of a link of the non-AP MLD changes, and then obtain, with reference to the fourth indication information, the available link or the link whose state changes in the non-AP MLD. When an AP (or AP MLD) end receives a notification indicating that the non-AP MLD (or some links thereof) enters an unavailable state, the AP end does not send an initial control frame to the non-AP MLD on an unavailable link until the AP end receives a notification indicating that the unavailable link resumes being available.

After the non-AP MLD sends the notification indicating that the unavailable link resumes available, the STAs on the links that resume being available may immediately resume to a normal transmit/receive state, or wait for specified time T (for example, a short interframe space (short interframe space, SIFS)) and then resume to the normal transmit/receive state.

In this embodiment of this application, when the non-AP MLD or a STA on a link of the non-AP MLD is temporarily unavailable due to some reasons, the non-AP MLD actively reports a state change of a link of the non-AP MLD, and reports the changed link, so that the AP MLD learns, in a timely manner, the state change of the link of the non-AP MLD associated with the AP MLD and the changed link. Therefore, the AP MLD does not initiate transmission to the non-AP MLD on an unavailable link of the non-AP MLD, to reduce a waste of resources.

The foregoing content describes in detail the methods provided in this application. To facilitate implementation of the foregoing solutions in embodiments of this application, embodiments of this application further provide corresponding apparatuses or devices.

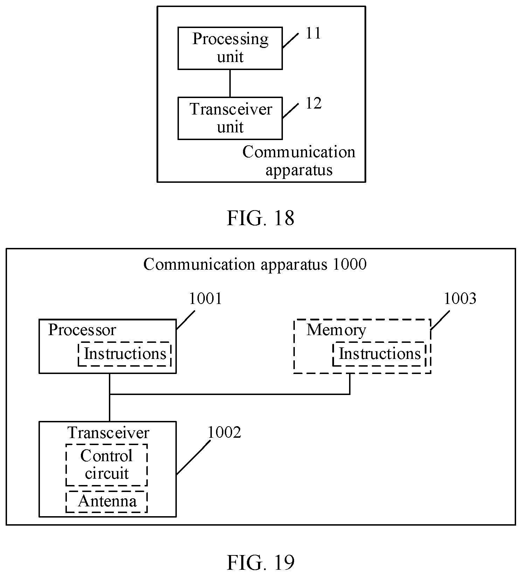

In embodiments of this application, the AP MLD and the non-AP MLD may be divided into functional modules based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. The following describes in detail a communication apparatus in an embodiment of this application with reference to FIG. 18 and FIG. 19. The communication apparatus is an AP MLD or a non-AP MLD. Further, the communication apparatus may be an apparatus in an AP MLD, or the communication apparatus is an apparatus in a non-AP MLD.

When an integrated unit is used, refer to FIG. 18. FIG. 18 is a schematic diagram of a structure of a communication apparatus according to an embodiment of this application. As shown in FIG. 18, the communication apparatus includes a processing unit 11 and a transceiver unit 12.

In some embodiments of this application, the communication apparatus may be a non-AP MLD or a chip in the non-AP MLD, for example, a Wi-Fi chip. That is, the communication apparatus may be configured to perform steps, functions, or the like performed by the non-AP MLD in the foregoing method embodiments.

In a first design, the processing unit 11 is configured to generate a first frame. The first frame includes first indication information, and the first indication information indicates that an EMLSR non-AP MLD is disabled for an AP MLD. The transceiver unit 12 is configured to send the first frame.

Optionally, the transceiver unit 12 is further configured to send a second frame. The second frame includes second indication information, and the second indication information indicates that the EMLSR non-AP MLD is available.

It should be understood that the communication apparatus in the first design may correspondingly perform Embodiment 1, and the foregoing operations or functions of the units in the communication apparatus are respectively used to implement corresponding operations of the EMLSR non-AP MLD in Embodiment 1. For brevity, details are not described herein again.

In a second design, the processing unit 11 is configured to generate a third frame. The third frame includes fourth indication information, and the fourth indication information indicates an available link or a link whose state changes in the EMLSR non-AP MLD. The transceiver unit 12 is configured to send the third frame. Optionally, the third frame further includes third indication information, and the third indication information indicates that a state of a link of a non-AP MLD changes. The non-AP MLD is a non-AP MLD that supports an EMLSR mode.

It should be understood that the communication apparatus in the second design may correspondingly perform Embodiment 2, and the foregoing operations or functions of the units in the communication apparatus are respectively used to implement corresponding operations of the EMLSR non-AP MLD in Embodiment 2. For brevity, details are not described herein again.

In a third design, after the EMLSR non-AP MLD and an associated AP MLD enter the EMLSR mode by exchanging EML OMN frames, the processing unit 11 is configured to generate a first EML OMN frame. The first EML OMN frame includes an EMLSR mode subfield and an EMLSR link bitmap, the EMLSR mode subfield is set to 1, and the first EML OMN frame is used to notify an updated EMLSR link. The transceiver unit 12 is configured to send the first EML OMN frame to the AP MLD.

It should be understood that the communication apparatus in the third design may correspondingly perform Embodiment 3, and the foregoing operations or functions of the units in the communication apparatus are respectively used to implement corresponding operations of the EMLSR non-AP MLD in Embodiment 3. For brevity, details are not described herein again.

In a fourth design, the transceiver unit 12 is configured to receive a control frame. The control frame includes a first user information field, the first user information field includes an association identifier 12 subfield and indication information, the indication information indicates whether the control frame received by a station indicated by the association identifier 12 subfield is an initial control frame, and there is at least one receive full capability link and at least one receive limitation link in the EMLSR non-AP MLD. The processing unit 11 is configured to determine whether the received control frame is an initial control frame. The control frame is an MU-RTS frame or a BSRP frame.

It should be understood that the communication apparatus in the fourth design may correspondingly perform Embodiment 4, and the foregoing operations or functions of the units in the communication apparatus are respectively used to implement corresponding operations of the EMLSR non-AP MLD in Embodiment 4. For brevity, details are not described herein again.

In a fifth design, the transceiver unit 12 is configured to receive a control frame. The control frame includes a common information field, the common information field includes indication information, the indication information indicates whether the control frame is an initial control frame, and there is at least one receive full capability link and at least one receive limitation link in the EMLSR non-AP MLD. The processing unit 11 is configured to determine whether the received control frame is an initial control frame. The control frame is an MU-RTS frame or a BSRP frame.

It should be understood that the communication apparatus in the fifth design may correspondingly perform Embodiment 5, and the foregoing operations or functions of the units in the communication apparatus are respectively used to implement corresponding operations of the EMLSR non-AP MLD in Embodiment 5. For brevity, details are not described herein again.

In a sixth design, the processing unit 11 is configured to generate a third frame. The third frame includes fourth indication information, and the fourth indication information indicates an available link or a link whose state changes in the non-AP MLD. The transceiver unit 12 is configured to send the third frame.

It should be understood that the communication apparatus in the sixth design may correspondingly perform Embodiment 6, and the foregoing operations or functions of the units in the communication apparatus are respectively used to implement corresponding operations of the non-AP MLD in Embodiment 6. For brevity, details are not described herein again.

FIG. 18 is reused. In some other embodiments of this application, the communication apparatus may be an AP MLD or a chip in the AP MLD, for example, a Wi-Fi chip. That is, the communication apparatus may be configured to perform steps, functions, or the like performed by the AP MLD in the foregoing method embodiments.

In a design, the transceiver unit 12 is configured to receive a first frame. The first frame includes first indication information, and the first indication information indicates that an EMLSR non-AP MLD is disabled for the AP MLD. The processing unit 11 is configured to determine, based on the first indication information in the first frame, that the EMLSR non-AP MLD is disabled.

Optionally, the transceiver unit 12 is further configured to receive a second frame. The second frame includes second indication information, and the second indication information indicates that the EMLSR non-AP MLD is available.

It should be understood that the communication apparatus in the design may correspondingly perform Embodiment 1, and the foregoing operations or functions of the units in the communication apparatus are respectively used to implement corresponding operations of the AP MLD in Embodiment 1. For brevity, details are not described herein again.

In a design, the transceiver unit 12 is configured to receive a third frame. The third frame includes fourth indication information, and the fourth indication information indicates an available link or a link whose state changes in the EMLSR non-AP MLD. The processing unit 11 is configured to determine an available link of the EMLSR non-AP MLD based on third indication information and the fourth indication information in the third frame. Optionally, the third frame further includes the third indication information, and the third indication information indicates that a state of a link of a non-AP MLD changes. The non-AP MLD is a non-AP MLD that supports an EMLSR mode.

It should be understood that the communication apparatus in the design may correspondingly perform Embodiment 2, and the foregoing operations or functions of the units in the communication apparatus are respectively used to implement corresponding operations of the AP MLD in Embodiment 2. For brevity, details are not described herein again.

In a design, after the EMLSR non-AP MLD and the associated AP MLD enter the EMLSR mode by exchanging EML OMN frames, the transceiver unit 12 is configured to receive a first EML OMN frame. The first EML OMN frame includes an EMLSR mode subfield and an EMLSR link bitmap, the EMLSR mode subfield is set to 1, and the first EML OMN frame is used to notify an updated EMLSR link. The processing unit 11 is configured to determine an available link of the EMLSR non-AP MLD based on the first EML OMN frame.

It should be understood that the communication apparatus in the design may correspondingly perform Embodiment 3, and the foregoing operations or functions of the units in the communication apparatus are respectively used to implement corresponding operations of the AP MLD in Embodiment 3. For brevity, details are not described herein again.

In a design, the processing unit 11 is configured to generate a control frame. The control frame includes a first user information field, the first user information field includes an association identifier 12 subfield and indication information, and the indication information indicates whether the control frame received by a station indicated by the association identifier 12 subfield is an initial control frame. The transceiver unit 12 is configured to send the control frame.

It should be understood that the communication apparatus in the design may correspondingly perform Embodiment 4, and the foregoing operations or functions of the units in the communication apparatus are respectively used to implement corresponding operations of the AP MLD in Embodiment 4. For brevity, details are not described herein again.

In a design, the processing unit 11 is configured to generate a control frame. The control frame includes a common information field, the common information field includes indication information, and the indication information indicates whether the control frame is an initial control frame. The transceiver unit 12 is configured to send the control frame.

It should be understood that the communication apparatus in the design may correspondingly perform Embodiment 5, and the foregoing operations or functions of the units in the communication apparatus are respectively used to implement corresponding operations of the AP MLD in Embodiment 5. For brevity, details are not described herein again.

In a design, the transceiver unit 12 is configured to receive a third frame. The third frame includes fourth indication information, and the fourth indication information indicates an available link or a link whose state changes in the non-AP MLD. Optionally, if the third frame further includes third indication information, the third indication information indicates whether a state of a link of the non-AP MLD changes. Specifically, for implementations of the third indication information and the fourth indication information, refer to the foregoing description. Details are not described herein again. The processing unit 11 is configured to determine an available link of the non-AP MLD based on the fourth indication information in the third frame. Optionally, after the transceiver unit 12 of the AP MLD associated with the non-AP MLD receives the third frame, the processing unit 11 determines an available link of the non-AP MLD based on the third indication information and the fourth indication information carried in the third frame.

It should be understood that the communication apparatus in the design may correspondingly perform Embodiment 6, and the foregoing operations or functions of the units in the communication apparatus are respectively used to implement corresponding operations of the AP MLD in Embodiment 6. For brevity, details are not described herein again.

The foregoing describes the AP MLD and the non-AP MLD in embodiments of this application. The following describes possible product forms of the AP MLD and the non-AP MLD. It should be understood that any product in any form having the function of the communication apparatus described in FIG. 18 falls within the protection scope of embodiments of this application. It should be further understood that the following description is merely an example, and product forms of the AP MLD and the non-AP MLD in embodiments of this application are not limited thereto.

As a possible product form, the AP MLD and the non-AP MLD described in embodiments of this application may be implemented by using a general bus architecture.

For ease of description, refer to FIG. 19. FIG. 19 is a schematic diagram of a structure of a communication apparatus 1000 according to an embodiment of this application. The communication apparatus 1000 may be an AP MLD or a non-AP MLD, or a chip in the AP MLD or the non-AP MLD. FIG. 19 shows only main components of the communication apparatus 1000. In addition to a processor 1001 and a transceiver 1002, the communication apparatus may further include a memory 1003 and an input/output apparatus (not shown in the figure).

The processor 1001 is mainly configured to process a communication protocol and communication data, control the communication apparatus, execute a software program, and process data of the software program. The memory 1003 is mainly configured to store the software program and the data. The transceiver 1002 may include a control circuit and an antenna. The control circuit is mainly configured to perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1001 may read the software program in the memory 1003, interpret and execute instructions of the software program, and process data of the software program. When data needs to be sent wirelessly, the processor 1001 performs baseband processing on the to-be-sent data, and then outputs a baseband signal to a radio frequency circuit. The radio frequency circuit performs radio frequency processing on the baseband signal, and then sends a radio frequency signal in an electromagnetic wave form through the antenna. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independently of the processor for baseband processing. For example, in a distributed scenario, the radio frequency circuit and the antenna may be disposed remotely independent of the communication apparatus.

The processor 1001, the transceiver 1002, and the memory 1003 may be connected through a communication bus.

In a design, the communication apparatus 1000 may be configured to perform a function of the EMLSR non-AP MLD in Embodiment 1. The processor 1001 may be configured to perform step S101 in FIG. 5, and/or configured to perform another process of the technology described in this specification. The transceiver 1002 may be configured to perform step S102 and step S105 in FIG. 5, and/or configured to perform another process of the technology described in this specification.

In another design, the communication apparatus 1000 may be configured to perform a function of the AP MLD in Embodiment 1. The processor 1001 may be configured to perform step S104 in FIG. 5, and/or configured to perform another process of the technology described in this specification. The transceiver 1002 may be configured to perform step S103 and step S106 in FIG. 5, and/or configured to perform another process of the technology described in this specification.

In a design, the communication apparatus 1000 may be configured to perform a function of the EMLSR non-AP MLD in Embodiment 2. The processor 1001 may be configured to perform step S201 in FIG. 8, and/or configured to perform another process of the technology described in this specification. The transceiver 1002 may be configured to perform step S202 in FIG. 8, and/or configured to perform another process of the technology described in this specification.

In another design, the communication apparatus 1000 may be configured to perform a function of the AP MLD in Embodiment 2. The processor 1001 may be configured to perform step S204 in FIG. 8, and/or configured to perform another process of the technology described in this specification. The transceiver 1002 may be configured to perform step S203 in FIG. 8, and/or configured to perform another process of the technology described in this specification.

In a design, the communication apparatus 1000 may be configured to perform a function of the EMLSR non-AP MLD in Embodiment 3. The processor 1001 may be configured to perform step S301 in FIG. 13, and/or configured to perform another process of the technology described in this specification. The transceiver 1002 may be configured to perform step S302 in FIG. 13, and/or configured to perform another process of the technology described in this specification.

In another design, the communication apparatus 1000 may be configured to perform a function of the AP MLD in Embodiment 3. The processor 1001 may be configured to perform step S304 in FIG. 13, and/or configured to perform another process of the technology described in this specification. The transceiver 1002 may be configured to perform step S303 in FIG. 13, and/or configured to perform another process of the technology described in this specification.

In a design, the communication apparatus 1000 may be configured to perform a function of the EMLSR non-AP MLD in Embodiment 4. The processor 1001 may be configured to perform step S404 in FIG. 14, and/or configured to perform another process of the technology described in this specification. The transceiver 1002 may be configured to perform step S403 in FIG. 14, and/or configured to perform another process of the technology described in this specification.

In another design, the communication apparatus 1000 may be configured to perform a function of the AP MLD in Embodiment 4. The processor 1001 may be configured to perform step S401 in FIG. 14, and/or configured to perform another process of the technology described in this specification. The transceiver 1002 may be configured to perform step S402 in FIG. 14, and/or configured to perform another process of the technology described in this specification.

In a design, the communication apparatus 1000 may be configured to perform a function of the EMLSR non-AP MLD in Embodiment 5. The processor 1001 may be configured to perform step S504 in FIG. 16, and/or configured to perform another process of the technology described in this specification. The transceiver 1002 may be configured to perform step S503 in FIG. 16, and/or configured to perform another process of the technology described in this specification.

In another design, the communication apparatus 1000 may be configured to perform a function of the AP MLD in Embodiment 5. The processor 1001 may be configured to perform step S501 in FIG. 16, and/or configured to perform another process of the technology described in this specification. The transceiver 1002 may be configured to perform step S502 in FIG. 16, and/or configured to perform another process of the technology described in this specification.

In any one of the foregoing designs, the processor 1001 may include a transceiver configured to implement sending and receiving functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions. The instructions may be a computer program. The computer program is run on the processor 1001, so that the communication apparatus 1000 can perform the method described in any one of the foregoing method embodiments. The computer program may be fixed in the processor 1001, and in this case, the processor 1001 may be implemented by hardware.

In an implementation, the communication apparatus 1000 may include a circuit, and the circuit may implement the sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited by FIG. 19. The communication apparatus may be an independent device or may be a part of a large device. For example, the communication apparatus may be:
(1) an independent integrated circuit IC, a chip, or a chip system or subsystem;
(2) a set including one or more ICs, where optionally, the set of ICs may further include a storage component configured to store data and a computer program;
(3) an ASIC such as a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others.

In a possible product form, the AP MLD and the non-AP MLD in embodiments of this application may be implemented by a general-purpose processor.

The general-purpose processor for implementing the non-AP MLD includes a processing circuit and an input/output interface internally connected to and communicating with the processing circuit.

In a design, the general-purpose processor may be configured to perform a function of the EMLSR non-AP MLD in Embodiment 1. Specifically, the processing circuit may be configured to perform step S101 in FIG. 5, and/or another process of the technology described in this specification. The input/output interface may be configured to perform steps S102 and S105 in FIG. 5, and/or another process of the technology described in this specification.

In a design, the general-purpose processor may be configured to perform a function of the EMLSR non-AP MLD in Embodiment 2. Specifically, the processing circuit may be configured to perform step S201 in FIG. 8, and/or another process of the technology described in this specification. The input/output interface may be configured to perform steps S202 in FIG. 8, and/or another process of the technology described in this specification.

In a design, the general-purpose processor may be configured to perform a function of the EMLSR non-AP MLD in Embodiment 3. Specifically, the processing circuit may be configured to perform step S301 in FIG. 13, and/or another process of the technology described in this specification. The input/output interface may be configured to perform steps S302 in FIG. 13, and/or another process of the technology described in this specification.

In a design, the general-purpose processor may be configured to perform a function of the EMLSR non-AP MLD in Embodiment 4. Specifically, the processing circuit may be configured to perform step S404 in FIG. 14, and/or another process of the technology described in this specification. The input/output interface may be configured to perform step S403 in FIG. 14, and/or another process of the technology described in this specification.

In a design, the general-purpose processor may be configured to perform a function of the EMLSR non-AP MLD in Embodiment 5. Specifically, the processing circuit may be configured to perform step S504 in FIG. 16, and/or another process of the technology described in this specification. The input/output interface may be configured to perform steps S503 in FIG. 16, and/or another process of the technology described in this specification.

The general-purpose processor for implementing the AP MLD includes a processing circuit and an input/output interface internally connected to and communicating with the processing circuit.

In a design, the general-purpose processor may be configured to perform a function of the AP MLD in Embodiment 1. Specifically, the processing circuit may be configured to perform step S104 in FIG. 5, and/or another process of the technology described in this specification. The input/output interface may be configured to perform steps S103 and S106 in FIG. 5, and/or another process of the technology described in this specification.

In a design, the general-purpose processor may be configured to perform a function of the AP MLD in Embodiment 2. Specifically, the processing circuit may be configured to perform step S204 in FIG. 8, and/or another process of the technology described in this specification. The input/output interface may be configured to perform steps S203 in FIG. 8, and/or another process of the technology described in this specification.

In a design, the general-purpose processor may be configured to perform a function of the AP MLD in Embodiment 3. Specifically, the processing circuit may be configured to perform step S304 in FIG. 13, and/or another process of the technology described in this specification. The input/output interface may be configured to perform steps S303 in FIG. 13, and/or another process of the technology described in this specification.

In a design, the general-purpose processor may be configured to perform a function of the AP MLD in Embodiment 4. Specifically, the processing circuit may be configured to perform step S401 in FIG. 14, and/or another process of the technology described in this specification. The input/output interface may be configured to perform steps S402 in FIG. 14, and/or another process of the technology described in this specification.

In a design, the general-purpose processor may be configured to perform a function of the AP MLD in Embodiment 5. Specifically, the processing circuit may be configured to perform step S501 in FIG. 16, and/or another process of the technology described in this specification. The input/output interface may be configured to perform steps S502 in FIG. 16, and/or another process of the technology described in this specification.

It should be understood that the communication apparatuses in the foregoing various product forms have any function of the AP MLD or the EMLSR non-AP MLD in the method embodiments. Details are not described herein again.

An embodiment of this application further provides a computer-readable storage medium. The computer-readable storage medium stores computer program code. When the processor executes the computer program code, an electronic device performs the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through the interface circuit, to enable the apparatus to perform the method in any one of the foregoing embodiments.

An embodiment of this application further provides a wireless communication system, including an AP MLD and a non-AP MLD. The AP MLD and the non-AP MLD may perform the method in any one of the foregoing embodiments.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium. The communication medium includes any medium that facilitates transmission of a computer program from one place to another. The storage medium may be any available medium accessible to a general-purpose or a dedicated computer.

In the foregoing specific implementations, the objectives, technical solutions, and advantageous effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A link state indication method, comprising:
generating, by a non-access point multi-link device non-AP MLD, a third frame, wherein the third frame comprises fourth indication information, and the fourth indication information indicates an available link or a link whose state changes in the non-AP MLD; and
sending, by the non-AP MLD, the third frame.

2. A link state indication method, comprising:
receiving, by an access point multi-link device AP MLD, a third frame, wherein the third frame comprises fourth indication information, and the fourth indication information indicates an available link or a link whose state changes in the non-AP MLD; and
determining, by the AP MLD, an available link of the non-AP MLD based on the fourth indication information in the third frame.

3. The method according to claim 1 or 2, wherein the third frame further comprises third indication information, the third indication information indicates that a state of a link of the non-AP MLD changes, and the non-AP MLD is a non-AP MLD in a supported mode.

4. The method according to claim 3, wherein that a state of a link of the non-AP MLD changes comprises: the link is disabled;
the third indication information indicates that there is a disabled link; and
the fourth indication information indicates an available link of the non-AP MLD, or the fourth indication information indicates a disabled link of the non-AP MLD.

5. The method according to claim 3, wherein that a state of a link of the non-AP MLD changes comprises: an unavailable link of the non-AP MLD changes to an available link;
the third indication information indicates that there is an unavailable link that changes to an available link in the non-AP MLD; and
the fourth indication information indicates an available link of the non-AP MLD, or the fourth indication information indicates an EMLSR link that changes from unavailable to available in the non-AP MLD.

6. The method according to claim 3, wherein that a state of a link of the non-AP MLD changes comprises: the link is disabled, or an unavailable link of the non-AP MLD changes to an available link; and
the third indication information specifically indicates that there is a disabled link and there is no unavailable link that changes to an available link in the non-AP MLD; or
the third indication information specifically indicates that there is no disabled link and there is an unavailable link that changes to an available link in the non-AP MLD.

7. The method according to any one of claims 3 to 6, wherein the third indication information and the fourth indication information can be located in an AP assistance request control subfield of a high throughput HT control field of the third frame; or
the third indication information and the fourth indication information can be located in an aggregated control A-control subfield of the third frame.

8. The method according to any one of claims 3 to 6, wherein the third frame is an enhanced multi-link EML operating mode notification OMN frame, the third indication information and the fourth indication information can be located in an EML control field of the third frame, and an EMLSR mode subfield comprised in the EML control field is set to 1.

9. The method according to claim 8, wherein the EML control field further comprises one or more of the following information: disabling start time, availability start time, disabling end time, disabling duration, and transmit and receive capabilities of an available link of the EMLSR non-AP MLD.

10. The method according to any one of claims 1 to 9, wherein the fourth indication information is a bitmap, and one bit of the fourth indication information corresponds to one link; and
when a bit in the fourth indication information is set to a first value, it indicates that a link corresponding to the bit is an available link or a link whose state changes; or when a bit in the fourth indication information is set to a second value, it indicates that a link corresponding to the bit is an unavailable link or a link whose state does not change.

11. A communication apparatus, comprising:
a processing unit, configured to generate a third frame, wherein the third frame comprises fourth indication information, and the fourth indication information indicates an available link or a link whose state changes in a non-AP MLD; and
a transceiver unit, configured to send the third frame.

12. A communication apparatus, comprising:
a transceiver unit, configured to receive a third frame, wherein the third frame comprises fourth indication information, and the fourth indication information indicates an available link or a link whose state changes in a non-AP MLD; and
a processing unit, configured to determine an available link of the non-AP MLD based on the fourth indication information in the third frame.

13. The communication apparatus according to claim 11 or 12, wherein the third frame further comprises third indication information, the third indication information indicates that a state of a link of the non-AP MLD changes, and the non-AP MLD is a non-AP MLD that supports an EMLSR mode or a non-AP MLD that supports an NSTR mode.

14. The communication apparatus according to claim 13, wherein that a state of a link of the non-AP MLD changes comprises: the link is disabled;
the third indication information indicates that there is a disabled link; and
the fourth indication information indicates an available link of the non-AP MLD, or the fourth indication information indicates a disabled link of the non-AP MLD.

15. The communication apparatus according to claim 13, wherein that a state of a link of the non-AP MLD changes comprises: an unavailable link of the non-AP MLD changes to an available link;
the third indication information indicates that there is an unavailable link that changes to an available link in the non-AP MLD; and
the fourth indication information indicates an available link of the non-AP MLD, or the fourth indication information indicates a link that changes from unavailable to available in the non-AP MLD.

16. The communication apparatus according to claim 13, wherein that a state of a link of the non-AP MLD changes comprises: the link is disabled, or an unavailable link of the non-AP MLD changes to an available link; and
the third indication information specifically indicates that there is a disabled link and there is no unavailable link that changes to an available link in the non-AP MLD; or
the third indication information specifically indicates that there is no disabled link and there is an unavailable link that changes to an available link in the non-AP MLD.

17. The communication apparatus according to any one of claims 13 to 16, wherein the third indication information and the fourth indication information can be located in an AP assistance request control subfield of a high throughput HT control field of the third frame; or
the third indication information and the fourth indication information can be located in an aggregated control A-control subfield of the third frame.

18. The communication apparatus according to any one of claims 13 to 16, wherein the third frame is an enhanced multi-link EML operating mode notification OMN frame, the third indication information and the fourth indication information can be located in an EML control field of the third frame, and an EMLSR mode subfield comprised in the EML control field is set to 1.

19. The communication apparatus according to claim 18, wherein the EML control field further comprises one or more of the following information: disabling start time, availability start time, disabling end time, disabling duration, and transmit and receive capabilities of an available link of the EMLSR non-AP MLD.

20. The communication apparatus according to any one of claims 11 to 19, wherein the fourth indication information is a bitmap, and one bit of the fourth indication information corresponds to one link; and
when a bit in the fourth indication information is set to a first value, it indicates that a link corresponding to the bit is an available link or a link whose state changes; or when a bit in the fourth indication information is set to a second value, it indicates that a link corresponding to the bit is an unavailable link or a link whose state does not change.

21. A communication apparatus, comprising a processor and a transceiver, wherein the transceiver is configured to send and receive a frame, and the processor is configured to execute program instructions, to enable the communication apparatus to perform the method according to any one of claims 1 to 10.

22. A computer-readable storage medium, wherein the computer-readable storage medium stores program instructions, and when the program instructions are run on a computer, the computer is enabled to perform the method according to any one of claims 1 to 10.

23. A computer program product comprising program instructions, wherein when the program instructions are run on a computer, the computer is enabled to perform the method according to any one of claims 1 to 10.
